# EUROPÄISCHE PATENTSCHRIFT

(11) **EP 4 093 632 B1**
(45) Veröffentlichungstag und Bekanntmachung des Hinweises auf die Patenterteilung: **25.06.2025**
(21) Anmeldenummer: 21701473.7
(22) Anmeldetag: 20.01.2021
(51) Int. Cl.: B60L 53/122, B60L 53/22, H01F 5/00, B60L 53/39, H02J 7/00, H02J 50/12, H01F 27/00, H04B 5/00, H01F 3/10, H01F 27/38, H01F 38/14, H02J 50/40, H02J 50/80, H02M 3/00, H04B 5/26

(54) **KONTAKTLOSES ENERGIEÜBERTRAGUNGSSYSTEM ZUM LADEN VON ELEKTROFAHRZEUGEN**
CONTACTLESS ENERGY TRANSMISSION SYSTEM FOR CHARGING ELECTRIC VEHICLES
SYSTÈME DE TRANSMISSION D'ÉNERGIE SANS CONTACT POUR CHARGER DES VÉHICULES

(30) Priorität: 20.01.2020 DE 102020200579
(43) Veröffentlichungstag der Anmeldung: 30.11.2022
(73) Patentinhaber: SUMIDA Components & Modules GmbH, 94130 Obernzell (DE)
(72) Erfinder: UCZULKO, Marco, 94469 Deggendorf (DE); WRENSCH, Philemon, 94034 Passau (DE)
(74) Vertreter: Grünecker Patent- und Rechtsanwälte PartG mbB
(86) Internationale Anmeldenummer: PCT/EP2021/051172
(87) Internationale Veröffentlichungsnummer: WO 2021/148453

(56) Entgegenhaltungen:
- EP-A1- 3 545 537
- DE-A1- 102015 208 936
- DE-A1- 102017 205 215
- DE-A1- 102018 216 916
- US-A1- 2019 252 923

## Beschreibung

Die vorliegende Erfindung betrifft ein kontaktloses Energieübertragungssystem zum Laden von Elektrofahrzeugen, insbesondere zum Laden einer Antriebsbatterie oder Traktionsbatterie eines Elektrofahrzeugs.

Aufgrund des zunehmenden Anteils an elektrischem Strom, der aus regenerativen Energiequellen erzeugt wird, und weitgreifenden internationalen Abkommen zur Reduzierung von Treibhausgasen gewinnen Elektrokraftfahrzeuge, d.h. Kraftfahrzeuge mit Elektroantrieb, zunehmend an Bedeutung. Elektroautos stellen Beispiele für Elektrokraftfahrzeuge dar, die weiterhin Kraftfahrzeuge zur Personen- und Güterbeförderung, wie z.B. U-Bahnzüge, Fahrräder mit Elektroantrieb und dergleichen, umfassen. Im Allgemeinen ist unter einem Elektroauto ein Kraftfahrzeug zur Personenbeförderung mit mindestens vier Rädern zu verstehen, das von einem Elektromotor als sog. Elektroantrieb angetrieben wird und das die zu seiner Fortbewegung notwendige elektrische Energie in einer aus mehreren zusammengeschalteten Akkumulatorzellen oder Zellenblöcken bestehenden Traktionsbatterie speichert. Da diese Fahrzeuge im Betrieb selbst keine relevanten Schadstoffe emittieren, werden sie gegenüber treibstoffbetriebenen Fahrzeugen als emissionsfreie Fahrzeuge eingestuft.

Obgleich elektronisch gesteuerte Elektromotoren gegenüber Verbrennungsmotoren das maximale Drehmoment schon im Stillstand abgeben und daher, anders als im Fall eines Antriebs durch Verbrennungsmotoren, in der Regel kein Schaltgetriebe erforderlich ist, sowie Elektromotoren im Betrieb gegenüber Verbrennungsmotoren leiser und fast vibrationsfrei sind, ohne direkt schädliche Abgase zu emittieren, stellt die vergleichsweise wenig ausgebaute und uneinheitlich geregelte Ladeinfrastruktur und die daraus resultierende geringe Flexibilität für Nutzer von Elektrofahrzeugen zur spontanen Bewältigung längerer Strecken ein Hemmnis in der Marktakzeptanz dar.

Ein weiterer bedeutender Unterschied zwischen elektrischen und kraftstoffbetriebenen Fahrzeugen besteht im Vergleich von Ladezeiten und Tankzeiten zum Füllen der Energiespeicher. Hier stehen sich derzeitig beispielsweise wenige Minuten in der Tankzeit und mehrere zehn Minuten (gegenwärtig ca. 30 Minuten zur 80 %-igen Akkuladung an leistungsstarken Gleichstrom-Ladestationen) zum Laden von Antriebsbatterien oder Traktionsbatterien von Elektrokraftfahrzeugen gegenüber.

Bezüglich des Ladens von Elektrokraftfahrzeugen sind zwar alle Ladesysteme auf einer Norm aufgebaut, jedoch existieren bei Ladesteckern unterschiedliche Typen, die speziell für Elektrofahrzeuge geschaffen wurden. Hierdurch ergeben sich derzeitig verschiedene zur Verfügung stehende Ladeoptionen, die jedoch stark von Hersteller und Modell abhängig sind.

Gegenüber kraftstoffbetriebenen Fahrzeugen besteht die Möglichkeit, eine "Stromtankstelle" bzw. Ladestation zweckmäßigerweise an Orten anzuordnen, an denen viele Fahrzeuge auch bei Nichtnutzung untergebracht sind, wie etwa eine Garage oder fest zugewiesene Stellplätze bzw. Firmenparkplätze bei Firmenfahrzeugen. Es können zwar nahezu alle Elektroautos auch an jeder normalen Haushaltssteckdose aufgeladen werden, jedoch erlaubt eine im Haushaltsbereich übliche einphasige Steckverbindung mit einer Absicherung von 16 A maximal die Übertragung von 3,6 kW (16A*230V=3680W), so dass ein Aufladen eines Elektroautos an der Haushaltssteckdose generell mehrere Stunden benötigen würde. Weiterhin ist beim Laden an der Haushaltssteckdose auch noch zu beachten, dass an den Stromkreis der Haushaltssteckdose eventuell bereits andere Verbraucher im Haushalt angeschlossen sind und sich damit Beschränkungen für eine dauerhafte, insbesondere über mehrere Stunden hinweg erfolgende Belastung des Stromnetzes an der Haushaltsteckdose zum Laden eines Elektroautos ergeben.

Es scheint nicht unvernünftig, davon auszugehen, dass eine Steigerung der Akzeptanz von Elektroautos unter anderem an eine Steigerung der Elektromobilität gekoppelt ist und eine Verbesserung der Benutzerfreundlichkeit von Elektrofahrzeugen hier großen Einfluss entfalten kann.

Ein Ansatz zur Verbesserung bietet z.B. das berührungslose Laden ohne offene Kontakte, bei dem während der Fahrt oder beim Parken mittels Induktion berührungslos Energie auf das Auto zum Laden der Akkumulatoren an Bord des Elektrokraftzeugs übertragen wird. Da hier die Handhabung mit Steckern und Ladekabeln für den Benutzer entfällt, ergeben sich Möglichkeiten zur Steigerung der Marktakzeptanz.

Ein berührungsloses Ladesystem für Elektroautos umfasst im Allgemeinen eine Primärresonatoreinrichtung, die zur Abgabe von elektrischer Energie konfiguriert ist, und eine Sekundärresonatoreinrichtung, die zur Aufnahme der von der Primärresonatoreinrichtung abgegebenen elektrischen Energie ausgebildet ist.

Bei der drahtlosen Energieübertragung wird grundsätzlich zwischen zwei Prinzipien unterscheiden, die sich in den physikalischen Eigenschaften unterscheiden: Erstens die drahtlose Energieübertragung im Nahfeld, auch als nichtstrahlende Kopplung bezeichnet. Hierzu zählt z.B. die induktive Kopplung basierend auf dem magnetischen Fluss, der in der Primärresonatoreinrichtung erzeugt und von der Sekundärresonatoreinrichtung erfasst wird. Zweitens die Energieübertragung im Fernfeld, auch als strahlende Energieübertragung bezeichnet, welche auf elektromagnetischen Wellen basiert.

Die drahtlose Energieübertragung im Nahfeld (vgl. erstens oben) ist bezüglich der Reichweite der Energieübertragung auf Abstände beschränkt, die gegenüber der Wellenlänge der energieübertragenden Strahlung klein sind.

Die Energieübertragung im Fernfeld ist auf die Übertragung vergleichsweise kleiner Leistungen begrenzt, da die sog. Freiraumdämpfung (d.h. die Reduzierung der Leistungsdichte bei der Ausbreitung elektromagnetischer Wellen im freien Raum ohne Störeinflüsse von zusätzlich dämpfenden Medien oder Störungen durch Reflexion) nur einen sehr geringen Wirkungsgrad von weniger als 1 % zulässt.

Derzeitige Ladesysteme sind daher zum kontaktlosen Laden von Elektrofahrzeugen auf die Nahfeldübertragung von elektromagnetischer Energie durch hauptsächlich induktive Kopplung gerichtet, bei der eine Primärspule oder Sendespule in den Untergrund, z.B. Fahrbahnbelag oder Parkplatz, eingelassen ist, während eine Sekundärspule oder Empfängerspule am Elektrofahrzeug, beispielsweise am Unterboden, angebracht ist. Im privaten Bereich ist auch eine Aufbodenmontage möglich, wobei die Primär- oder Sendespule wenigstens teilweise aus dem Untergrund herausragt.

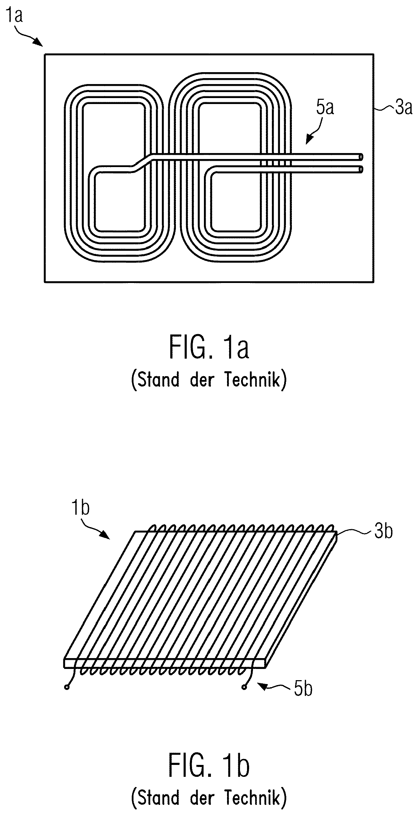

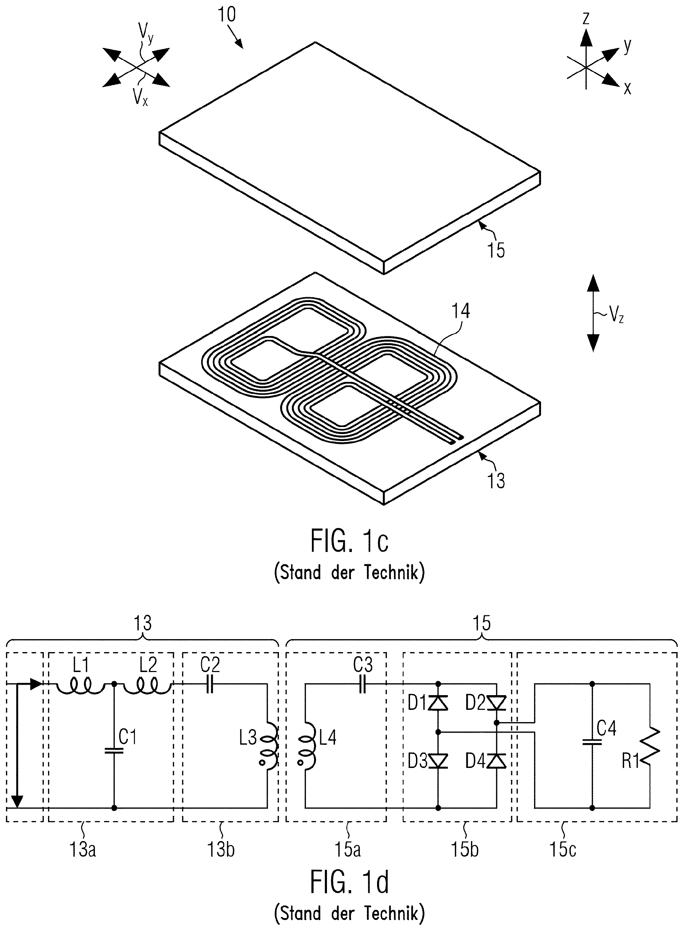

Hinsichtlich der Fig. 1a, 1b und 1c werden im Folgenden bekannte Spulendesigns für Primär- und/oder Sekundärspulen beschrieben.
Fig. 1a zeigt schematisch eine Aufsicht auf eine Spule 1a gemäß einem sog. "Doppel-D-Spulendesign". Hierbei ist eine Wicklung 5a auf einem magnetischen Kern 3a entsprechend dem dargestellten Design angeordnet, insbesondere wird der magnetische Kern 3a nicht von den einzelnen Windungen der Wicklung 5a umlaufen.
Fig. 1b zeigt schematisch eine Spule 1b gemäß einem sog. "Solenoid-Spulendesign", gemäß welchem eine Wicklung 5b über einem magnetischen Kern 3b angeordnet ist, so dass die einzelnen Windungen der Wicklung 5b den magnetischen Kern 3b umlaufen.

Eine Vorrichtung zum drahtlosen Laden von Elektrofahrzeugen ist beispielsweise in der Schrift WO 2016/114893 A1 beschrieben.

Aus jeder der Schriften DE 10 2017 205 215 A1, DE 10 2015 208 936 A1, US 2019/252923 A1 und EP 3 545 537 A1 ist eine kontaktlose Leistungsübertragungsvorrichtung bekannt.

Angesichts einer Verbesserung der Elektromobilität besteht eine Aufgabe im Allgemeinen darin, ein spezielles Spulendesign zum induktiven Laden eines Elektrofahrzeugs, z.B. eines Elektroautos, bereitzustellen, wobei unter einem verbesserten Wirkungsgrad eine verbesserte Ausgangsleistung, beispielweise ab 7 kW, unter gleichzeitiger Einhaltung einer kompakten Bauweise übertragen werden kann. Weiterhin besteht eine Aufgabe zur Bereitstellung eines Spulendesigns, welches eine Eigenerwärmung aufgrund von Verlustleistungen wenigstens verringert.

Allgemein sind bei der Entwicklung von Ladesystemen unter anderen Gesichtspunkten Rahmenbedingungen, wie z.B. ein vorgegebener Bauraum, eine vorgegebene Mindesteffizienz, eine vorgegebene Mindestübertragungsleistung, eine vorgegebene Mindestspannungsfestigkeit, Anforderungen an die Stabilität usw., einzuhalten.

Fig. 1c zeigt schematisch ein bekanntes System 10 zum kontaktlosen Laden eines Elektroautos. Das System 10 weist eine bodenseitige Primärresonatoreinrichtung 13 mit einer Wicklung 14 und eine fahrzeugseitige Sekundärresonatoreinrichtung 15 auf. Die Wicklung 14 ist entsprechend der Doppel-D-Konfiguration ausgebildet, die in Fig. 1a dargestellt ist. Ein kartesisches Koordinatensystem x, y, z bezeichnet eine Orientierung im Raum.

In bekannten Systemen sind anforderungsgemäß 10 kW an Leistung zu übertragen, um eine ausreichende Ladeleistung von Antriebsbatterien oder Traktionsbatterien zu erreichen. Jedoch tritt eine optimale Energieübertragung nur bei einer optimalen Anordnung der Sekundärresonatoreinrichtung 15 relativ zur bodenseitigen Primärresonatoreinrichtung 13 auf. Häufig ist eine optimale Anordnung der Sekundärresonatoreinrichtung 15 relativ zur Primärresonatoreinrichtung 13 nicht gewährleistet, da eine Anordnung der Sekundärresonatoreinrichtung 15 von einer Parkposition eines Elektroautors relativ zur Primärresonatoreinrichtung 15 abhängt. Üblicherweise ist hier von einem Versatz der Sekundärresonatoreinrichtung 15 in einer momentanen Parkposition relativ zu einer optimalen Anordnungsposition der Sekundärresonatoreinrichtung 15 auszugehen, etwa einem Versatz Vx entlang einer x-Richtung und/oder einem Versatz Vy entlang einer y-Richtung. Der Versatz Vx und/oder der Versatz Vy relativ zu einer optimalen Anordnung der Sekundärresonatoreinrichtung 15 bezüglich der bodenseitigen Primärresonatoreinrichtung 13 resultieren in einer geringeren Kopplung zwischen der Primärresonatoreinrichtung 13 und der Sekundärresonatoreinrichtung 15, wodurch die Effizienz der Energieübertragung beeinträchtigt wird.

Das System 10 kann ferner abhängig von einer Fahrzeugklasse eines zu ladenden Elektroautos einen Versatz Vz aufweisen, da eine relative Höhe (d.h. Abstand entlang einer z-Richtung) zwischen der Primärresonatoreinrichtung 13 und der Sekundärresonatoreinrichtung 15 von der Fahrzeugklasse von Elektroautos abhängig ist. Das System 10 ist für eine bestimmte Höhe zwischen der Primärresonatoreinrichtung 13 und der Sekundärresonatoreinrichtung 15 ausgelegt, d.h. bei der bestimmten Höhe zwischen der Primärresonatoreinrichtung 13 und der Sekundärresonatoreinrichtung 15 ist eine Betriebsfrequenz des Systems 10 (d.h. eine Frequenz, bei der das System 10 zum kontaktlosen Laden eines Elektroautos betrieben wird) gleich einer Resonanzfrequenz der Anordnung aus der Primärresonatoreinrichtung 13 und der Sekundärresonatoreinrichtung 15. Falls nun ein Elektroauto geladen wird, in dem die fahrzeugseitige Sekundärresonatoreinrichtung 15 unter einem Versatz Vz zur bestimmten Höhe angeordnet ist, bei der eine Resonanz eine optimale Energieübertragung bedeutet, ist das System 10 bei der Betriebsfrequenz nicht in der Resonanz.

Es ist eine Aufgabe, ein System zu entwerfen, das auch unter Versatz resonant und mit gutem Wirkungsgrad arbeiten kann. Es sind dabei unterschiedliche Lastanforderungen zu bedienen, ohne dass die eingesetzten Resonatoren, Induktivitäten und Kondensatoren überhitzen und die Energiequelle nicht überlastet wird.

Fig. 1d zeigt einen schematischen Schaltungsplan des Systems 10 aus Fig. 1c. Dabei weist die Primärresonatoreinrichtung 13 einen Eingangsfilter 13a mit Induktivitäten L1, L2 und einem Kondensator C1 und einen Primärresonator 13b mit einer Induktivität L3 und einem in Reihe geschalteten Kompensationskondensator C2 auf. Die Sekundärresonatoreinrichtung 15 umfasst einen Sekundärresonator 15a mit einer Induktivität L4 und einem in Reihe geschalteten Kompensationskondensator C3, einen Gleichrichter 15b mit Dioden D1 bis D4 und eine zu ladende Antriebsbatterie 15c eines Elektrokraftfahrzeugs (nicht dargestellt), die durch einen Batteriewiderstand R1 und eine Batteriekapazität C4 dargestellt wird. Am Eingangsfilter ist eine Kopplung mit einer Energieversorgung (nicht dargestellt) vorgesehen.

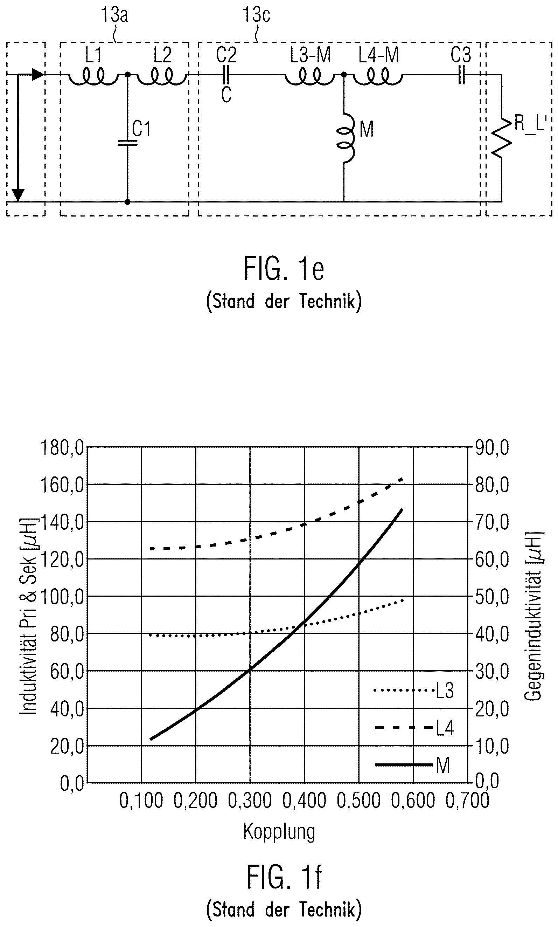

Fig. 1e zeigt ein vereinfachtes Ersatzschaltbild des Schaltungsplans aus Fig. 1d. Die induktive Kopplung zwischen der Primärresonatoreinrichtung 13 und der Sekundärresonatoreinrichtung 15 ist in dem vereinfachten Ersatzschaltbild von Fig. 1e durch einen gekoppelten Resonanzschaltkreis 13c dargestellt, wobei eine Gegeninduktivität M eine Kopplung veranschaulicht, insbesondere ist die Gegeninduktivität M proportional zu einer Kopplung k der Primärresonatoreinrichtung 13 und der Sekundärresonatoreinrichtung 15. Eine aus dem Ersatzschaltbild in Fig. 1d abgeleitete Gesamtimpedanz ist hierbei indirekt proportional zu M². Unter der Annahme, dass die Induktivitäten L3-M und L4-M in Fig. 1e annähernd unabhängig von der Kopplung k ist, kann eine Proportionalität zwischen der Gegeninduktivität M und der Kopplung k angenommen werden. Damit ist auch die aus dem Ersatzschaltbild in Fig. 1e abgeleitete Gesamtimpedanz indirekt proportional zu k². Dies wiederrum bedeutet bei gleicher Leistungsaufnahme, dass ein von einer Energieversorgung (nicht dargestellt) bezogener Strom ansteigt. Das Verhältnis von Strom und Spannung ist stark von der Kopplung abhängig, insbesondere ist eine große Eingangsspannung des Systems 10 in Fig. 1c bei geringer Kopplung erforderlich und bei großer Kopplung ergibt sich ein sehr großer Stromfluss. Da die Gesamtimpedanz des Systems 10 in Fig. 1c proportional zur effektiven Induktivität des Eingangsfilters 13a ist, wird daher eine große Gesamtimpedanz durch den Eingangsfilter 13a und dadurch eine Strombegrenzung bewirkt, was bei einer großen Kopplung vorteilhaft ist.

Da ein Verhältnis aus der Verlustleistung im Eingangsfilter 13a zur Ausgangsleistung der Resonatoren proportional zu M² (d.h. zu k²) ist, steigt das Verhältnis zwischen der Verlustleistung im Eingangsfilter 13a und der Ausgangsleistung bei großer Kopplung sehr stark an. Zum Erreichen einer gewünschten Ausgangsleistung ist ein sehr großer Eingangsstrom erforderlich, wobei auch starke Wirkungsgradeinbußen auftreten.

Es ergibt sich, dass die Änderung in der Gegeninduktivität M des Systems 10 in Fig. 1c sehr starken Einfluss auf benötigte Eingangsspannungen des Systems 10 in Fig. 1c hat. Bei Versatz treten damit große Varianzen der Gegeninduktivität auf, wie nun mit Bezug auf Fig. 1f veranschaulicht wird.

Fig. 1f stellt graphisch Ergebnisse eine Vergleichsmessung dar, die von den Erfindern durchgeführt wurde. Eine linke Ordinate stellt mit Bezug auf die Abszisse eine Abhängigkeit der Induktivitäten der Primär- und Sekundärresonatoren von der Kopplung k dar. Mit Bezug auf die rechte Ordinate in Fig. 1f ist eine Abhängigkeit der Gegeninduktivität M von der Kopplung k dargestellt. Es zeigt sich, dass die Gegeninduktivität M über einen weiten Bereich bei Änderungen der Kopplung k variiert. Im System 10 aus Fig. 1c ist daher eine Abdeckung des gesamten Arbeitsbereichs aufgrund der starken Änderung der Gegeninduktivität M nicht möglich, wenn gleichzeitig das System 10 in Fig. 1d effizient zu betreiben ist.

Angesichts der obigen Erläuterungen besteht eine Aufgabe darin, ohne große Veränderungen am Schaltungsaufbau einen möglichen Versatz ohne Einbußen in der Effizienz einer Energieübertragung zu kompensieren.

Die vorangegangenen Probleme und Aufgaben werden im Rahmen der vorliegenden Erfindung gelöst durch ein kontaktloses Energieübertragungssystem zum Laden von Elektrofahrzeugen gemäß dem unabhängigen Anspruch 1, wobei weitere vorteilhaftere Ausgestaltungen davon in den abhängigen Ansprüchen 2 bis 13 definiert sind.

Die Erfindung stellt in einem Aspekt ein kontaktloses Energieübertragungssystem zum Laden von Elektrofahrzeugen mit einer Primärresonatoreinrichtung und einer Sekundärresonatoreinrichtung bereit, wobei mindestens eine von der Primärresonatoreinrichtung und der Sekundärresonatoreinrichtung eine Resonatorschaltung umfasst.

In anschaulichen Ausführungsformen umfasst die Resonatorschaltung einen ersten und zweiten Anschluss, eine Mehrzahl von Wicklungen, eine Mehrzahl von Kondensatoren, ein erstes Schaltelement und ein zweites Schaltelement. Die Resonatorschaltung ist über den ersten und zweiten Anschluss mit einer Versorgungsschaltung oder einem Gleichrichter verbindbar. Entsprechend kann die Resonatorschaltung in einer Primärresonatoreinrichtung eingesetzt werden, wenn die Resonatorschaltung mit der Versorgungsschaltung verbunden ist, die das kontaktlose Energieübertragungssystem mit Energie versorgt, so dass von der Primärresonatoreinrichtung Energie kontaktlos zu einer Sekundärresonatoreinrichtung übertragen werden kann, oder in der Sekundärresonatoreinrichtung eingesetzt werden, wenn die Resonatorschaltung mit der Last verbunden ist, die wenigstens eine durch das kontaktlose Energieübertragungssystem zu ladende Batterievorrichtung darstellt, insbesondere eine zu ladende Antriebsbatterie oder Traktionsbatterie eines Elektrofahrzeugs.

Die Mehrzahl von Wicklungen ist dabei in eine erste Gruppe von Wicklungen und eine zweite Gruppe von Wicklungen unterteilt. Gemäß einigen anschaulichen Ausführungsformen hierin kann dabei einer jeden Gruppe von Wicklungen jeweils mindestens ein Kondensator aus der Mehrzahl von Kondensatoren zugeordnet sein, der zu der zugeordneten Gruppe von Wicklungen in Reihe geschaltet ist. Durch die einer jeden Gruppe zugeordneten Kondensatoren kann eine Resonanz der Resonatorschaltung auf eine bestimmte Resonanzfrequenz eingestellt werden, wobei ein jeder Kondensator mit der zugeordneten Gruppe von Wicklungen für sich eine bestimmte der Gruppe zugeordnete Resonanzfrequenz einstellt.

Weiterhin ist zwischen der ersten Gruppe von Wicklungen und der zweiten Gruppe von Wicklungen ein erster Verbindungsknoten angeordnet, der jeweils zwischen zwei aus der ersten Gruppe von Wicklungen, der zweiten Gruppe von Wicklungen und dem ersten Schaltelement angeordnet ist und über die erste Gruppe von Wicklungen mit dem ersten Anschluss verbunden ist, so dass der erste Verbindungsknoten sternförmig ausgebildet ist. Hierbei kann eine jede der Gruppen von Wicklungen, der zweiten Gruppe von Wicklungen und dem ersten Schaltelement direkt mit dem ersten Verbindungsknoten verbunden sein, insbesondere ohne ein weiteres Element zwischen dem ersten Verbindungsknoten und einer jeden aus der ersten Gruppe von Wicklungen, der zweiten Gruppe von Wicklungen und dem ersten Schaltelement. Durch das erste und zweite Schaltelement ist es möglich, die erste und zweite Gruppe von Wicklungen wegzuschalten. Beispielsweise können die erste und zweite Gruppe von Wicklungen weggeschaltet werden oder es können aus einer Reihenschaltung aus der ersten Gruppe und der zweiten Gruppe von Wicklungen die Wicklungen der zweiten Gruppe eliminiert werden. Dabei sind die Windungen der zweiten Gruppe am ersten Verbindungspunkt weiterhin mit der Schaltung verbunden, so dass die zweite Gruppe von Wicklungen trotz Wegschaltung durch Öffnen des zweiten Schaltelements ein definiertes Potential auf und es können Schäden durch Potentialunterschiede verhindert werden. In anschaulichen Beispielen hierin können die ersten und zweiten Gruppen von Wicklungen direkt mit dem ersten Verbindungsknoten verbunden sein, wobei zwischen dem ersten Verbindungsknoten jeder der Gruppen von Wicklungen kein weiteres Element angeordnet ist, so dass immer ein definiertes elektrisches Potential an jede der Gruppen von Wicklungen angelegt ist. In anschaulichen Ausführungsformen kann eine jede der Gruppen von Wicklungen zwischen dem zugeordneten Kondensator und dem ersten Verbindungsknoten angeordnet sein.

Ferner ist die zweite Gruppe von Wicklungen aus zwei parallel geschalteten elektrisch identischen Wicklungspaketen gebildet und ein jedes der parallel geschalteten Wicklungspakete der zweiten Gruppe von Wicklungen ist jeweils mit einem zugeordneten zusätzlichen Kondensator in Reihe geschaltet. Die den Wicklungspaketen der zweiten Gruppe von Wicklungen zugeordneten zusätzlichen Kondensatoren sind derart ausgebildet, dass die Verschaltung der parallelen Wicklungspakete der zweiten Gruppe mit den zugeordneten zusätzlichen Kondensatoren eine Resonanzfrequenz aufweist, die größer ist als eine Betriebsfrequenz des kontaktlosen Energieübertragungssystem, während eine Resonanzfrequenz der Resonatorschaltung für eine Reihenschaltung der ersten und zweiten Gruppen von Wicklungen mit den zugeordneten Kondensatoren eine Resonanzfrequenz aufweist, die im Wesentlichen gleich der Betriebsfrequenz des kontaktlosen Energieübertragungssystem ist. Somit wird erreicht, dass die Impedanz der weggeschalteten Windungen der zweiten Gruppe von Wicklungen hoch ist und Ausgleichsströme unterdrückt werden. Bei geöffnetem zweiten Schaltelement wird ferner aus der Parallelschaltung der Wicklungspakete der zweiten Gruppe von Wicklungen eine Reihenschaltung, in der die Wicklungspakete der zweiten Gruppe von Wicklungen zueinander antiparallel geschaltet sind. Damit wird erreicht, dass sich die in den Windungen der zweiten Gruppe von Wicklungen induzierten Spannungen wegheben. In jedem Betriebsmodus der Resonatorschaltung wird erreicht, dass die Resonatorschaltung bei der Betriebsfrequenz des kontaktlosen Energieübertragungssystems in Resonanz gehalten wird. Beispielsweise kann die Betriebsfrequenz des kontaktlosen Energieübertragungssystems in einem Bereich von 80 bis 90 kHz liegen, in dem eine gute Energieübertragungseffizienz erreicht werden kann. Gemäß weiteren Beispielen kann die Resonanzfrequenz der Verschaltung der parallelen Wicklungspakete der zweiten Gruppe mit den zugeordneten zusätzlichen Kondensatoren größer sein als 90 kHz, so dass die Resonanzfrequenz der Verschaltung der parallelen Wicklungspakete der zweiten Gruppe mit den zugeordneten zusätzlichen Kondensatoren ausreichend entfernt ist von der Betriebsfrequenz des kontaktlosen Energieübertragungssystems.

In einigen anschaulichen Ausführungsformen des Aspekts der Erfindung kann die Resonatorschaltung ferner eine dritte Gruppe von Wicklungen und ein damit in Reihe geschaltetes drittes Schaltelement umfassen, wobei die dritte Gruppe von Wicklungen und das damit in Reihe geschaltete dritte Schaltelement parallel zu der zweiten Gruppe von Wicklungen mit dem ersten Verbindungsknoten verbunden ist. Dabei erlaubt die Reihenschaltung aus der dritten Gruppe von Wicklungen und dem dritten Schaltelement eine weitere Einstellmöglichkeit der Resonanzschaltung. Gemäß anschaulicher Ausführungsformen ist der erste Verbindungsknoten sternförmig mit mindestens drei Beinen oder Strahlen ausgebildet. Hierbei kann eine jede der Gruppen von Wicklungen direkt mit dem ersten Verbindungsknoten verbunden sein, insbesondere ohne ein weiteres Element zwischen dem ersten Verbindungsknoten und einer jeden Gruppe von Wicklungen.

In einigen anschaulichen Ausführungsformen des Aspekts der Erfindung kann zwischen dem ersten Schaltelement und dem zweiten Schaltelement ein zweiter Verbindungsknoten angeordnet sein, über den jeweils das erste Schaltelement und das zweite Schaltelement mit dem ersten Anschluss verbunden ist, wobei der zweite Verbindungsknoten zwischen dem ersten Schaltelement, dem zweiten Schaltelement und dem ersten Anschluss sternförmig ausgebildet ist. Dabei kann die Resonatorschaltung ferner einen weiteren Schaltungsabschnitt mit einer vierten Gruppe von Wicklungen und einem damit in Reihe geschalteten vierten Schaltelement umfassen, wobei der weitere Schaltungsabschnitt parallel zu der zweiten Gruppe von Wicklungen mit dem zweiten Verbindungsknoten verbunden ist. Weiterhin kann der zweite Verbindungsknoten ferner zwischen dem ersten Schaltelement, dem zweiten Schaltelement und dem ersten Anschluss sternförmig ausgebildet sein und der Schaltungsabschnitt zwischen dem ersten Verbindungsknoten und dem zweiten Verbindungsknoten kann zu der zweiten Gruppe und dem damit in Reihe geschalteten ersten Schaltelement parallel geschaltet sein. Dabei wird der zweite Verbindungsknoten als gemeinsamer Fußpunkt für die parallel geschalteten Gruppen von Wicklungen bereitgestellt, der von der zweiten Gruppe von Wicklungen durch das zweite Schaltelement selektiv getrennt werden kann während er mit dem ersten Anschluss galvanisch verbunden ist. Gemäß anschaulicher Ausführungsformen ist der zweite Verbindungsknoten sternförmig mit mindestens drei Beinen oder Strahlen ausgebildet. Hierbei kann eine jede der Gruppen von Wicklungen mit dem zweiten Verbindungsknoten lediglich über dazwischen angeordnetes Schaltelement verbunden sein, insbesondere ist zwischen dem zweiten Verbindungsknoten und einer jeden Gruppe von Wicklungen ein zugeordnetes der Schaltelemente angeordnet. In einigen anschaulichen Beispielen hierin kann das zweite Schaltelement zwischen dem zweiten Verbindungsknoten und der zweiten Gruppe von Wicklungen angeordnet sein, wobei zwischen dem ersten Verbindungsknoten und dem zweiten Verbindungsknoten das erste Schaltelement angeordnet ist, so dass das erste Schaltelement zu der zweiten Gruppe von Wicklungen und dem zweiten Schaltelement parallel geschaltet ist. Mit anderen Worten, das erste Schaltelement befindet sich in einem ersten Schaltungsabschnitt zwischen dem ersten Verbindungsknoten und dem zweiten Verbindungsknoten, wobei die zweite Gruppe von Wicklungen und das zweite Schaltelement sich in einem zweiten Schaltungsabschnitt befinden, der zu dem ersten Schaltungsabschnitt parallel geschaltet ist. Der erste und der zweite Schaltungsabschnitt sind jeweils zu der ersten Gruppe von Wicklungen und zum ersten Verbindungsknoten in Reihe geschaltet.

In einigen anschaulichen Ausführungsformen des Aspekts der Erfindung können die zwei Schaltelemente derart konfiguriert sein, dass das zweite Schaltelement offen ist, solange das erste Schaltelement geschlossen ist, und das zweite Schaltelement nur dann geschlossen ist, wenn das erste Schaltelement offen ist. Gemäß dieser Konfiguration werden vorteilhafte Betriebsmoden realisiert, demgemäß wahlweise die Windungen der zweiten Gruppe von Wicklungen hinzu- oder weggeschaltet werden können, so dass die Anzahl von Windungen in der Resonatorschaltung zwischen der Anzahl von Windungen der ersten Gruppe oder der Gesamtzahl von Windungen der Mehrzahl von Wicklungen umgeschaltet werden kann.

In einigen anschaulichen Ausführungsformen des Aspekts der Erfindung kann die Mehrzahl von Wicklungen als eine Hybrid-Doppel-D-Solenoid-Spule über einem plattenförmigen Ferritkern bereitgestellt sein. Hierbei erlaubt ein Spulenaufbau gemäß einer Hybrid-Doppel-D-Solenoid-Spule eine relativ große Kopplung bei großem Abstand und/oder Versatz von Primär- und Sekundärresonatoreinrichtungen relativ zueinander.

In einigen anschaulichen Ausführungsformen des Aspekts der Erfindung kann die erste Gruppe von Wicklungen aus zwei parallel geschalteten elektrisch identischen Wicklungspaketen gebildet sein. In elektrisch identischen Wicklungspaketen sind die Strom- und Spannungswerte der parallel geschalteten Wicklungspakete identisch und Ausgleichsströme zwischen den parallel geschalteten Wicklungspaketen werden vermieden. Durch die Verwendung von parallel geschalteten Wicklungspaketen kann die Strombelastbarkeit der ersten Gruppe von Wicklungen vergrößert werden.

In einigen anschaulichen Ausführungsformen des Aspekts der Erfindung kann die zweite Gruppe von Wicklungen aus zwei parallel geschalteten elektrisch identischen Wicklungspaketen gebildet sein. Die Verwendung von parallel geschalteten Wicklungspaketen ermöglicht, dass induzierte Spannungen in den ungenutzten Windungen der weggeschalteten Wicklungen der zweiten Gruppe von Wicklungen teilweise oder vollständig eliminiert werden. Auch kann die Verwendung von parallel geschalteten Wicklungspaketen die Strombelastbarkeit der zweiten Gruppe von Wicklungen vergrößern.

In einigen anschaulichen Ausführungsformen des Aspekts der Erfindung kann die erste Gruppe von Wicklungen eine erste Windungszahl aus einem Bereich von 5 bis 20 Windungen aufweisen und die zweite Gruppe von Wicklungen kann eine zweite Windungszahl aus einem Bereich von 1 bis 10 Windungen aufweisen, wobei die erste Windungszahl größer ist als die zweite Windungszahl. Dies ermöglicht eine kompakte Resonatorschaltung mit vorteilhafter Energieübertragungseffizienz.

In den oben beschriebenen Aspekten erfolgt eine Anpassung der Gegeninduktivität, während eine Resonanzverhalten der Resonatorschaltung, insbesondere eine Resonanzfrequenz davon, nicht oder im Wesentlichen nicht geändert wird. Unabhängig von einer Schaltkonfiguration der Schaltelemente verbleiben Wicklungen weiterhin magnetisch im System.

In den oben und nachfolgend dargestellten Ausführungsformen stellt ein Verbindungsknoten einen definierten Knotenpunkt dar, an dem eine Mehrzahl von Leitungen verbunden sind.

Weitere Vorteile und anschauliche Ausführungsformen der oben dargestellten Aspekte der Erfindung werden nachfolgend mit Bezug auf die beiliegenden Figuren beschrieben, wobei:
- Fig. 1a-1b: schematisch bekannte Spulendesigns darstellen;
- Fig. 1c: schematisch ein bekanntes System zum kontaktlosen Laden eines Elektroautos darstellt;
- Fig. 1d: schematisch einen Schaltungsplan des Systems zum kontaktlosen Laden eines Elektroautos aus Fig. 1c darstellt;
- Fig. 1e: ein vereinfachtes Ersatzschaltbild des Schaltungsplans aus Fig. 1d schematisch darstellt;
- Fig. 1f: Ergebnisse einer Vergleichsmessung graphisch darstellt;
- Fig. 2: schematisch eine Spule gemäß einem sog. "Hybrid-Doppel-D-Solenoid-Spulendesign" dargestellt;
- Fig. 3a: eine Aufsicht auf ein induktives Bauelement für ein System zum kontaktlosen Laden gemäß einigen anschaulichen Ausführungsformen der vorliegenden Erfindung darstellt;
- Fig. 3b: eine Unterseitenansicht des induktiven Bauelements gemäß Fig. 3a darstellt;
- Fig. 3c: eine Innenseitenschnittansicht des in den Fig. 3a und 3b dargestellten induktiven Bauelements darstellt;
- Fig. 3d: eine Seitenschnittansicht des Ferritkerns mit Wickelkörper zu den Fig. 3a-3c darstellt;
- Fig. 4: schematisch ein System zum kontaktlosen Laden eines Elektrofahrzeugs gemäß anschaulicher Ausführungsformen der Erfindung darstellt;
- Fig. 5: einen schematischen Schaltungsplan einer Resonatorschaltung für ein kontaktloses Energieübertragungssystem gemäß anschaulichen Ausführungsformen der Erfindung darstellt;
- Fig. 6: einen schematischen Schaltungsplan einer Resonatorschaltung für ein kontaktloses Energieübertragungssystem gemäß weiteren anschaulichen Ausführungsformen der Erfindung darstellt; und
- Fig. 7: graphisch einen Zusammenhang zwischen Induktivitäten und Kopplung für eine Resonatorschaltung gemäß anschaulichen Ausführungsformen der Erfindung darstellt.

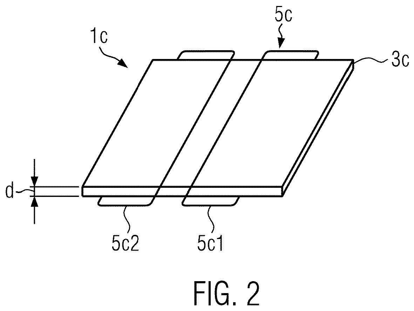

In Fig. 2 ist schematisch eine Spule 1c gemäß einem sog. "Hybrid-Doppel-D-Solenoid-Spulendesign" dargestellt. Das dargestellte Spulendesign der Spule 1c ist eine Mischung zwischen einem Doppel-D-Spulendesign (vgl. das Doppel-D-Spulendesign gemäß der Darstellung in Fig. 1a) und einem Solenoid-Spulendesign (vgl. das Solenoid-Spulendesign gemäß der Darstellung in Fig. 1b) darstellt.

Entsprechend der schematischen Darstellung in Fig. 2 umfasst die Spule 1c eine Wicklung 5c über einem magnetischen Kern 3c, umfassend eine Windung 5c1 und eine weitere Windung 5c2, wobei die Windungen 5c1 und 5c2 schräg zum magnetischen Kern 3c gewickelt sind. Dies bedeutet, dass eine Windungsachse von jeder der Windungen 5c1, 5c2, d.h. eine Achse senkrecht zu einer Ebene, in der die Windungen 5c1 und 5c2 jeweils liegen, um weniger als 45° von einer Richtung entlang einer Dicke d abweicht. Im Vergleich zu dem Solenoid-Spulendesign, das in Fig. 1b gezeigt ist, ist ersichtlich, dass eine Windungsachse der Wicklung 5b im Wesentlichen senkrecht zu einer Richtung entlang einer Dicke des magnetischen Kerns 3b (entsprechend wäre "d" in Fig. 2 auch für Fig. 1b zu definieren) orientiert ist, insbesondere ist die Windungsachse der Wicklung 5b, d.h. eine Achse senkrecht zu einer Ebene, in der die Windungen der Wicklungen 5b liegen, unter einem Winkel von mehr als 45° zur Richtung entlang der Dicke des magnetischen Kerns 3b orientiert.

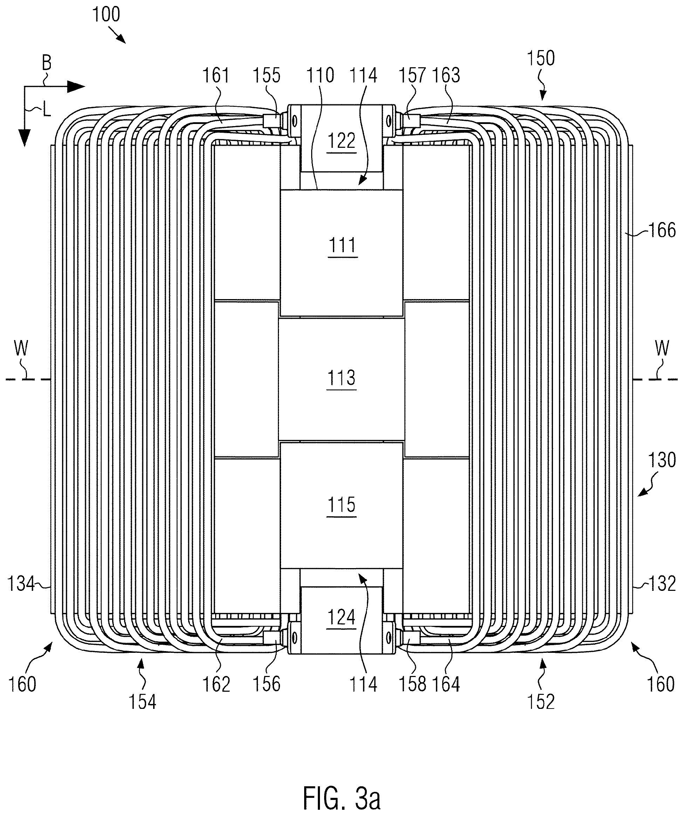

Mit Bezug auf die Fig. 3a bis 3d wird nachfolgend ein induktives Bauelement 100 für ein System zum kontaktlosen Laden gemäß verschiedenen anschaulichen Ausführungsformen der vorliegenden Erfindung detailliert beschrieben, wobei das induktive Bauelement 100 entsprechend dem sog. "Hybrid-Doppel-D-Solenoid-Spulendesign" ausgebildet ist. Das induktive Bauelement 100 kann eine anschauliche Ausführungsform für ein kontaktloses Energieübertragungssystem gemäß der Erfindung darstellen.

Fig. 3a zeigt eine Aufsicht auf eine Oberseite des induktiven Bauelements 100. Mit "Oberseite" wird nachfolgend die Seite des induktiven Bauelements 100 bezeichnet, die zu einer "Unterseite" des induktiven Bauelements 100 gegenüberliegend angeordnet ist, welche wiederum einem weiteren induktiven Bauelement (nicht dargestellt) in einem System zum kontaktlosen Laden eines Elektrofahrzeugs (nicht dargestellt) zugerichtet ist.

In einem anschaulichen Beispiel kann das induktive Bauelement 100 an einem Elektrofahrzeug (nicht dargestellt) angebracht sein. Hier kann z.B. weiterhin das induktive Bauelement 100 derart angebracht sein, dass die Oberseite einem Fahrzeugunterboden zugerichtet ist, während die Unterseite einem Untergrund (nicht dargestellt), etwa einer Fahrbahn, einem Stellplatzboden, einem Garagenboden etc., zugerichtet ist.

In einem anderen anschaulichen Beispiel kann das induktive Bauelement 100 an oder in einem Untergrund (nicht dargestellt), etwa einer Fahrbahn, einem Stellplatzboden, einem Garagenboden etc., angeordnet sein, beispielsweise darin eingelassen sein. Hierbei wäre die Unterseite einem Fahrzeugunterboden (nicht dargestellt) eines Elektrofahrzeugs (nicht dargestellt) zugerichtet.

Das induktive Bauelement 100 umfasst einen plattenförmigen Ferritkern 110 und eine über dem plattenförmigen Ferritkern 110 angeordnete Hybrid-Doppel-D-Solenoid-Spule 150, die eine Mehrzahl von Windungen 160 aufweist. Die Mehrzahl von Windungen 160 wird hierbei aus mehreren Windungen (d.h., mindestens vier Windungen) gebildet. In Fig. 3a ist beispielhaft eine Windung durch das Bezugszeichen 166 bezeichnet. Dementsprechend steht das Bezugszeichen "166" für eine einzelne Windung der Mehrzahl von Windungen 160, gemäß einem anschaulichen und nicht beschränkenden Beispiel für die Windung 166.

Die Mehrzahl von Windungen 160 ist in eine Mehrzahl von Gruppen jeweils aus mehreren unmittelbar aufeinanderfolgenden Windungen in einer Weise gruppiert, auf die weiter unten noch ausführlicher eingegangen wird.

Der plattenförmige Ferritkern 110 ist gemäß der Darstellung in Fig. 3a aus mehreren einzelnen Ferritplatten 111, 113, 115 gebildet, die zur Bildung des plattenförmigen Ferritkerns 110 zusammengefügt sind. Alternativ kann der plattenförmige Ferritkern 110 einteilig, insbesondere aus einem einzelnen plattenförmigen Ferritelement, gebildet sein, wobei in diesem Fall im plattenförmigen Ferritkern 110 entgegen der Darstellung in Fig. 3a keine Fügestellen vorhanden sind.

Gemäß einiger anschaulicher Ausführungsformen, wie in Fig. 3a beispielhaft dargestellt ist, kann der plattenförmige Ferritkern 110 seitliche Aussparungen 114 aufweisen, in die z.B. Anschlüsse 122, 124 des induktiven Bauelements platzsparend aufgenommen sind, wobei laterale Abmessungen des induktiven Bauelements gering gehalten werden. Zusätzlich oder alternativ können kapazitive Bauelemente (nicht dargestellt), wie etwa mindestens ein Kondensator, in die Aussparungen 114 aufgenommen sein.

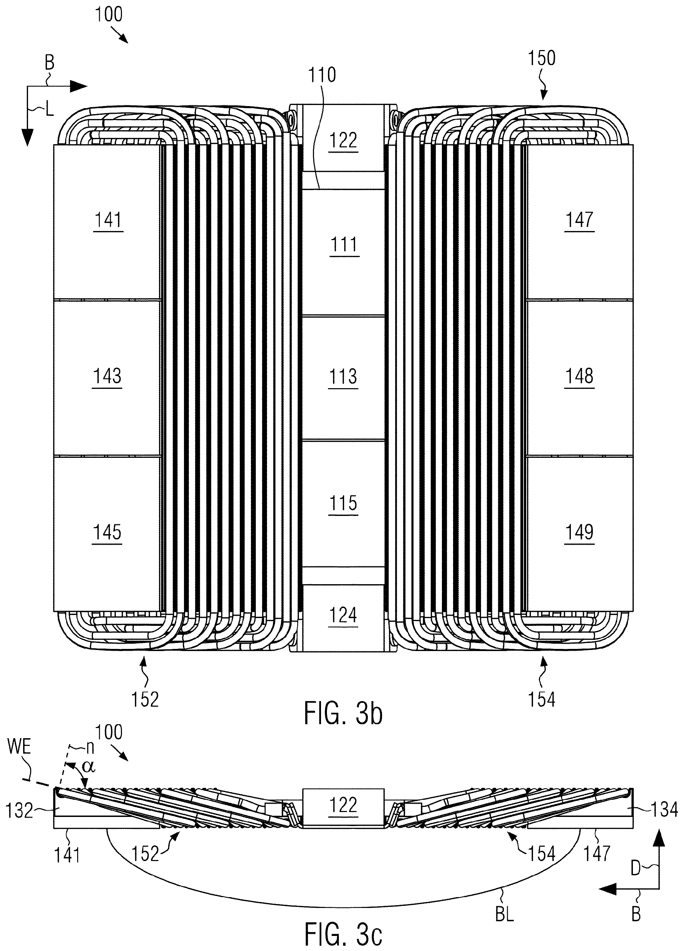

Gemäß beispielhaften Ausführungsformen sind die Aussparungen 114, wie in Fig. 3a beispielhaft veranschaulicht ist, als verjüngte Abschnitte des Ferritkerns 110 bereitgestellt, wobei eine laterale Abmessung des Ferritkerns 110 in den Aussparungen 114 kleiner ist als eine laterale Abmessung des Ferritkerns 110 außerhalb der Aussparungen 114 bezogen auf eine Längsrichtung des Ferritkerns 110, die hinsichtlich der Fig. 3a und 3b mit dem Bezugszeichen L bezeichnet wird. Eine Richtung senkrecht zur Längsrichtung L wird als Breitenrichtung bezeichnet und ist in den Fig. 3a-2d mit dem Bezugszeichen B versehen.

Gemäß anschaulicher Ausführungsformen der vorliegenden Erfindung kann für die Abmessungen in Längsrichtung L und Breitenrichtung B gelten: L > B, L ≈ B oder L < B.

Eine Richtung senkrecht zu den Richtungen L, B ist in den Fig. 3c und 2d als Dickenrichtung D bezeichnet. Hinsichtlich der Dickenrichtung D weist der Ferritkern 110 Abmessungen auf, die kleiner sind als die Abmessungen entlang der Richtungen L und B: D < L, B.

Gemäß spezieller beispielhafter Ausführungsformen kann gelten: D < L/10 und/oder D < B/10. Gemäß bevorzugter Ausführungsformen ist D < L/20 und/oder D < B/20. Gemäß spezieller anschaulicher Beispiele hierin kann gelten: D < L/30 und/oder D < B/30. Die sich ergebenden Aspektverhältnisse bzgl. D und L, B bezeichnen den Ferritkern 110 anschaulich als "plattenförmigen Ferritkern" und eine Richtung entlang einer Dicke wird mit einer Richtung identifiziert, entlang welcher der "plattenförmige Ferritkern" eine kleinste Abmessung aufweist, ohne dass Aussparungen, z.B. die Aussparungen 114, berücksichtigt werden.

Gemäß anschaulicher Ausführungsformen umfasst die Hybrid-Doppel-D-Solenoid-Spule 150 eine erste Wicklung 152 und eine zweite Wicklung 154, die jeweils eine Mehrzahl von (insbesondere zwei oder drei oder mehr) Windungen umfassen. In der in Fig. 3a dargestellten Aufsicht auf die Oberseite des induktiven Bauelements 100 ist die erste Wicklung 152 bzgl. der Breitenrichtung B an einem der zweiten Wicklung 154 gegenüberliegenden Ende des plattenförmigen Ferritkerns 110 angeordnet bzw. Windungsabschnitte der Mehrzahl von Windungen der ersten Wicklung 152 (beispielsweise die Windung 166 in Fig. 3a) erstrecken sich über wenigstens den größten Teil des plattenförmigen Ferritkerns 110 im Wesentlichen parallel zur Längsrichtung L. Fig. 3a zeigt hier den Spezialfall, dass sich die Windungsabschnitte über dem plattenförmigen Ferritkern 110 der ersten Wicklung 152 parallel zur Längsrichtung L erstrecken, solange die Windungsabschnitte der ersten Wicklung 152 in der in Fig. 3a dargestellten Ansicht direkt über dem plattenförmigen Ferritkern 110 verlaufen, während Windungsabschnitte seitlich des plattenförmigen Ferritkerns 110 einen bogenförmigen Verlauf annehmen und hinsichtlich der in Fig. 3a dargestellten Ansicht hinter dem plattenförmigen Ferritkern 110 zur Unterseite des induktiven Bauelements 100 geführt werden. Entsprechendes gilt auch für die zweite Wicklung 154. Dies stellt jedoch keine Beschränkung dar und es kann eine davon abweichende Orientierung der Windungsabschnitte umgesetzt werden, z.B. schief zur Längsrichtung L.

Die erste Wicklung 152 ist mit den Anschlüssen 122, 124 des induktiven Bauelements durch Anschlusskontakte 157, 158 elektrisch und mechanisch verbunden, wobei die Anschlusskontakte 157 und158 durch entsprechende Leitungsabschnitte 163 und 164 mit der Mehrzahl von Windungen der ersten Wicklung 152 verbunden sind. Die Anschlusskontakte 157, 158 und die Anschlüsse 122, 124 können durch beliebige Maßnahmen elektrisch und mechanisch miteinander verbunden sein, beispielsweise durch Crimpverbindung, Schraubverbindung, Steckverbindung, Lötverbindung und dergleichen. Entsprechend ist die zweite Wicklung 154 durch Anschlusskontakte 155, 156 mit den Anschlüssen 122, 124 verbunden, wobei der Anschlusskontakt 155 über den Leitungsabschnitt 161 mit der Mehrzahl von Windungen der ersten Wicklung 154 verbunden ist und der Anschlusskontakt 156 durch den Leitungsabschnitt 162 mit der Mehrzahl von Windungen der zweiten Wicklung 154 verbunden ist.

Die Leitungsabschnitte 161, 162, 163, 164 erstrecken sich im Wesentlichen parallel zur Breitenrichtung B seitlich des plattenförmigen Ferritkerns 110 und sind gemäß anschaulicher Ausführungsformen innenliegend geführt, wobei die Leitungsabschnitte 161, 162, 163, 164 gemäß anschaulichen Ausführungsformen entlang der Längsrichtung L mit geringerem Abstand zu den Seitenflächen des plattenförmigen Ferritkerns 110 verlaufen, als am weitesten beabstandete Windungsabschnitte der Mehrzahl von Windungen der ersten und zweiten Wicklungen 152, 154. Alternativ können die Leitungsabschnitte 161, 162, 163, 164 unter größerem Abstand zum plattenförmigen Ferritkern 110 angeordnet sein, als die am weitesten außen liegenden Windungsabschnitte der Mehrzahl von Windungen der ersten und zweiten Wicklung 152, 154, wodurch die Leitungsabschnitte 161-164 hier nun als außenliegenden Leitungsabschnitte bereitgestellt sind. In letzterem Fall (nicht dargestellt) werden die Leitungsabschnitte 161-164 von Windungsabschnitten der Mehrzahl von Windungen der ersten und zweiten Wicklungen 152, 154 nicht überlagert.

Mit Bezug auf Fig. 3b ist eine Aufsicht auf eine Unterseite des induktiven Bauelements 100 entgegen der Aufsichtsansicht auf die Oberseite gemäß der Darstellung in Fig. 3a dargestellt. Im Vergleich zwischen den Fig. 3a und 3b ergibt sich, dass Windungsabschnitte der Windungen der ersten und zweiten Wicklungen 152, 154, die in den dargestellten Aufsichtsansichten der Fig. 3a und 3b direkt über dem plattenförmigen Ferritkern 110 verlaufen, aufgrund einer Schrägstellung der Windungen der ersten und zweiten Wicklungen in 152, 154 im Falle der Oberseite in Fig. 3a relativ zur Breitenrichtung B z.B. mit größerem Abstand zueinander angeordnet sein können, als im Fall der Ansicht in Fig. 3b, die die Unterseite darstellt, in der die Windungsabschnitte der Windungen der ersten und zweiten Wicklungen 152, 154 entlang der Breitenrichtung B z.B. unter einem relativ zu Fig. 3b geringen Abstand geführt sind, so dass Polabschnitte 141, 143, 145 des plattenförmigen Ferritkerns 110 zu einem Ende des plattenförmigen Ferritkerns 110 in der Breitenrichtung B und bzgl. der Breitenrichtung B am entgegengesetzten Ende als freiliegende Polabschnitte 147, 148 und 149 gebildet sind, während in der Aufsicht auf die Oberseite in Fig. 3a lediglich der plattenförmigen Ferritkern 110 an dazwischen angeordneten Verbindungsabschnitten 111, 113, 115 freiliegt, die gemäß der Darstellung in Fig. 3b zwischen den Polabschnitten 141, 143, 145 und 147, 148, 149 angeordnet sind.

Mit Bezug auf Fig. 3c ist eine Seitenansicht des induktiven Bauelements 100 aus den Fig. 3a und 3b dargestellt, die beispielsweise aus Fig. 3b dadurch hervorgeht, dass das in Fig. 3b dargestellte induktiven Bauelement 100 aus der dargestellten Papierebene hochkant heraus gekippt wird, so dass seitlich senkrecht auf den Anschluss 122 geblickt wird. In der in Fig. 3c dargestellten Seitenansicht ist die Schrägstellung der Windungen der ersten und zweiten Wicklung in 152, 154 bzgl. der Breitenrichtung B ersichtlich, d.h., dass eine Normale zu einer Ebene gebildet durch eine Windung der ersten Wicklung 152 unter einem schrägen Winkel zur Breitenrichtung B orientiert ist, wie durch eine schematische Wickelebene WE in Fig. 3c bezüglich einer Normalen n bezeichnet ist, wobei ein Winkel α einen Winkel zwischen der Normalen n und der Breitenrichtung B bezeichnet. Der Winkel α ist ungleich 0° und kann gemäß spezieller anschaulicher Ausführungsformen z.B. größer oder gleich 5° (α ≥ 5°) sein, ohne hierdurch die vorliegende Erfindung zu beschränken. Entsprechendes gilt für die zweite Wicklung 154, wobei die erste Wicklung und die zweite Wicklung hinsichtlich einer parallel zur Dickenrichtung D orientierten Symmetrieachse zwischen der ersten und zweiten Wicklung spiegelsymmetrisch gewickelt sein können.

Gemäß anschaulicher Ausführungsformen, wie in den Fig. 3a bis 3c dargestellt ist, umfasst das induktiven Bauelement 100 einen Wickelkörper 130 mit einem ersten Halterungselement 132, das zur Aufnahme und Halterung der ersten Wickelung 152 konfiguriert ist, und einem zweiten Halterungselement 134, das zur Aufnahme und Halterung der zweiten Wicklung konfiguriert ist. Die Halterungselemente 132 können beispielsweise von einer länglichen plattenförmigen Gestalt sein, die den Ferritkern 110 entlang der Längsrichtung L wenigstens teilweise bedeckt und aus einem elektrisch isolierenden Material gebildet ist, beispielsweise durch Spritzguss oder dergleichen.

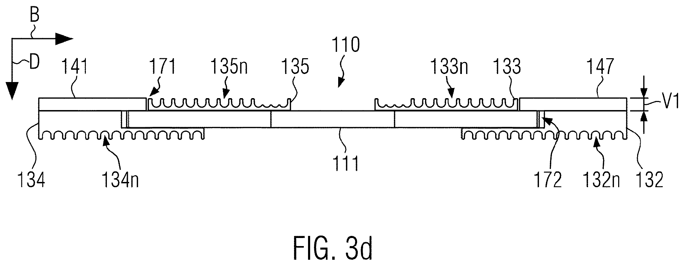

Hinsichtlich Fig. 3d ist der plattenförmigen Ferritkern 110 aus der Darstellung in Fig. 3c ohne den Anschluss 122 und die erste und zweite Wicklung 152, 154 mit Anschlusskontakten dargestellt. Gemäß der Darstellung in Fig. 3d sind insbesondere nur der plattenförmige Ferritkern 110 und der Wickelkörper 130 in Seitenansicht gezeigt.

Gemäß anschaulicher Beispiele der vorliegenden Erfindung, wie in Fig. 3d anschaulich dargestellt ist, weist der plattenförmigen Ferritkern 110 eine erste Abstufung 171 und eine zweite Abstufung 172 auf. Gemäß der Abstufung 171 ist eine freiliegende Oberfläche des Polabschnitts 141 entlang der Dickenrichtung D zum Verbindungsabschnitt 111 versetzt angeordnet, d.h. zwischen einer gleich orientierten Oberfläche des Verbindungsabschnitts 111 relativ zur freiliegenden Polfläche des Polabschnitts 141 wird durch die Abstufung 171 ein Versatz V1 gebildet. Entsprechend ist der Polabschnitt 147 zum Verbindungabschnitt 111 durch die Abstufung 172 versetzt, der Versatz V1 ist insbesondere zwischen der freiliegenden Polfläche des Polabschnitts 147 und der gleich orientierten Oberfläche des Verbindungsabschnitts 111 gebildet. Dies stellt keine Beschränkung der vorliegenden Erfindung dar und es kann anstelle der zwei Abstufungen 171, 172 lediglich eine der Abstufungen 171, 172 gebildet sein. Alternativ können die Abstufungen 171 und 172 derart gebildet sein, dass ein der Abstufung 171 zugeordneter Versatz ungleich einem Versatz ist, der der zweiten Abstufung 172 zugeordnet ist.

Gemäß der beispielhaften Darstellung in Fig. 3d weist der Wickelkörper 130 Halterungselemente 132, 133, 134, 135 auf, wobei die Halterungselemente 133, 135 neben den entsprechenden Abstufungen 171, 172 gebildet sind, so dass sie den Verbindungsabschnitt 111 teilweise überlagern, während der Polabschnitt 141 bzw. der Polabschnitt 147 durch das Halterungselement 135 bzw. 133 nicht überlagert wird. Hingegen sind die Halterungselemente 132, 134 derart gebildet, dass die Abstufungen 171, 172 auf der Oberseite des plattenförmigen Ferritkerns 110 durch die Halterungselemente 132, 134 überlagert werden.

Das Halterungselement 132 weist eine Mehrzahl von Nuten 132n auf, die gemäß der Darstellung in Fig. 3c der Anzahl von Windungen der zweiten Wicklung entsprechen. Das Halterungselement 133 weist eine Mehrzahl von Nuten 133n auf, die der Anzahl von Windungen der zweien Wicklung 154 entsprechen und der Anzahl von Nuten 132n des Halterungselements 132 korrespondieren. Entsprechendes gilt für die Halterungselemente 135 und 134 bzgl. der ersten Wicklung 152 aus der Darstellung in Fig. 3c.

Die Nuten 132n, 133n, 134n und 135n nehmen jeweils einen Windungsabschnitt einer Windung über der Oberseite bzw. der Unterseite des plattenförmigen Ferritkerns 110 auf und isolieren benachbarte Windungsabschnitte entlang der Oberseite bzw. Unterseite des plattenförmigen Ferritkerns 110 voneinander, so dass ein Windungskurzschluss verhindert werden kann, wenn z.B. auf eine Ummantelung von Windungsabschnitten verzichtet wird. Außerdem tragen die Halterungselemente 132, 133, 134, 135 zur mechanischen Fixierung und Stabilisierung der ersten und zweiten Wicklungen 152, 154 bei.

In Fig. 3d ist eine beispielhafte Ausgestaltung des Wickelkörpers 130 dargestellt, in der einige Nuten der Halterungselemente 133, 135 weniger tief sind bzw. weniger hohe Trennwände aufweisen. Diese beispielhaften Ausgestaltungen dienen lediglich zur Veranschaulichung von bauraumbedingten Ausgestaltungsmöglichkeiten der Halterungselemente 133, 135 und stellen keine Beschränkung der vorliegenden Erfindung dar. Alternativ können die Nuten des Halterungselements 133 und/oder 135 möglichst gleichförmig (d.h. mit möglichst gleichförmiger Tiefe bzw. gleichförmig hohen Trennwänden, wobei "möglichst" eine tolerierbare Abweichung vom Idealfall im Rahmen von Fertigungstoleranzen bedeutet, z.B. Abweichungen von etwa 5% oder etwa 10% von einem vorgegebenen Wert) gebildet sein.

Mit Bezug auf Fig. 3c wird eine Anschlusskonfiguration der ersten und zweiten Wicklung 152, 154 an die Anschlüsse 122, 124 des induktiven Bauelements 100 beschrieben. Die erste Wicklung 152 ist hierbei durch die Anschlusskontakte 157, 158 mit den Anschlüssen 122, 124 (vergleiche Fig. 3a hinsichtlich der Anschlusskontakte der ersten Wicklung 152) elektrisch verbunden und die zweite Wicklung 154 ist mit den Anschlüssen 122, 124 des induktiven Bauelements 100 mittels der Anschlusskontakte 155, 156 elektrisch verbunden. Bei Anlegen einer Spannung an die Anschlüsse 122, 124 des induktiven Bauelements 100 in der ersten Wicklung 152 und in der zweiten Wicklung 154 wird im Betrieb ein elektrischer Strom hervorgerufen, der die erste Wicklung 152 entsprechend des Windungssinns der ersten Wicklung 152 in einem ersten Drehsinn durchströmt, während die zweite Wicklung 154 entsprechend dem Windungssinn der zweiten Wicklung 154 mit einem zweiten Drehsinn durchströmt wird, wobei der erste Drehsinn und der zweite Drehsinn zueinander entgegengesetzt orientiert sind. Dies führt zu einem Magnetfeld, wie durch eine schematisch eingezeichnete B-Feldlinie BL in Fig. 3c dargestellt wird. Insbesondere tritt die B-Feldlinie BL aus einem der Polabschnitte 141, 147 aus und tritt in den anderen der Polabschnitte 141, 147 ein, wie durch die Orientierung des elektrischen Stroms in den ersten und zweiten Wicklungen 152, 154 bestimmt wird. Im plattenförmigen Ferritkern 110 erfolgt der Rückschluss der B-Feldlinie BL zwischen den Polabschnitten 141, 147 das induktiven Bauelement 100, das gemäß der Fig. 3a-2d beschrieben ist. Das induktive Bauelement 100 weist damit eine gute Kopplungseigenschaft zu einem weiteren nicht dargestellten induktiven Bauelement auf, wobei es gegenüber lateralen Versetzungen zweier induktiven Bauelemente zueinander im Vergleich zu einem Spulendesign gemäß dem bekannten Spulendesign gemäß der Darstellung in Fig. 1a unempfindlich ist und gegenüber dem Spulendesign in Fig. 1b und 1c ein vorteilhaftes Kopplungsverhalten aufweist.

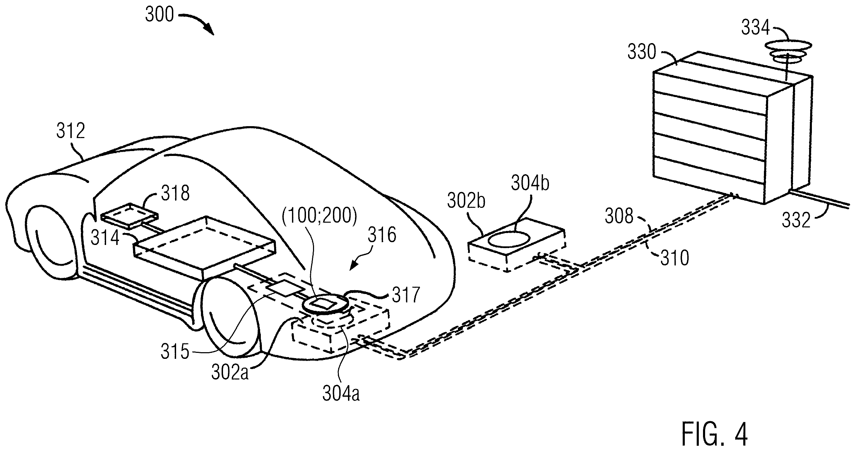

Mit Bezug auf Fig. 4 wird nun ein Ladesystem 300 zum kontaktlosen Laden eines Elektrofahrzeugs 312 beschrieben. Das System 300 100 kann eine andere anschauliche Ausführungsform für ein kontaktloses Energieübertragungssystem gemäß der Erfindung darstellen.

Gemäß der Darstellung in Fig. 4 sind im Ladesystem 300 Primärresonatoreinrichtungen 302a und 302b mit primärseitigen induktiven Bauelementen 304a, 304b bereitgestellt, die beispielsweise an einem Parkplatz oder in einer Garage positioniert sind und in den Boden eingelassen sein können. Die Primärresonatoreinrichtungen 302a, 302b sind über entsprechende Verbindungsleitungen 308, 310 mit einer Stromverteilungseinrichtung 330 verbunden, die wiederum über eine Leitung 332 mit dem Stromnetz verbunden ist, und stellen für sich Elemente eines Primärladesystems zum Laden des Elektrofahrzeugs 312 bereit. Der Stromverteiler 330 kann beispielsweise eine Kommunikationseinheit 334 aufweisen, die mit einer oder mehreren externen Steuereinheiten (nicht dargestellt) in Verbindung stehen kann. Gemäß einigen anschaulichen Beispielen hierin kann die Primärresonatoreinrichtung 302a durch das induktive Bauelement 100, das mit Bezug auf die Fig. 3a bis 3d oben beschrieben ist, bereitgestellt werden.

Fahrzeugseitig ist in dem Elektrofahrzeug 312 eine Energiespeichereinrichtung 318 vorgesehen, beispielsweise eine aufladbare Batterie bzw. ein aufladbares System aus Akkumulatorzellen, die über eine Ladesteuerung 314 mit einer Sekundärresonatoreinrichtung 316 verbunden ist, insbesondere eine Antriebsbatterie oder Traktionsbatterie. Im Gegensatz zu Energiespeicher für die Onboard-Elektronik eines Elektrokraftfahrzeugs, die im 12- oder 48-Volt-Bordnetz betrieben wird, liefen Antriebsbatterien von Elektrokraftfahrzeugen eine Spannung von einigen Hundert Volt Gleichspannung, beispielweise in einem Bereich über 300 V, so dass Anforderungen an die Energiespeichereinrichtung 318 und das Leistungsvermögen von der Energiespeichereinrichtung 318 im Vergleich zu anderen Energiespeichern um ein Vielfaches höher sind.

Die Sekundärresonatoreinrichtung 316 kann beispielsweise ein Gehäuse 317 umfassen, in das ein induktives Bauelement aufgenommen ist, wie hinsichtlich der Fig. 3a-3b oben beschrieben ist (vergleiche induktive Bauelemente 100; 200), und sie kann als ein Element eines Sekundärladesystems zum Laden des Elektrofahrzeugs 312 bereitgestellt sein. Das Gehäuse 317 kann zur mechanischen Montage am Elektrofahrzeug 312, beispielsweise am Unterboden des Elektrofahrzeugs 312, ausgebildet sein. Die Sekundärresonatoreinrichtung 316 kann weiterhin ein kapazitives Bauelement 315 umfassen, das zusammen mit dem induktiven Bauelement eine elektromagnetische Resonatorschaltung bildet. Gemäß einigen anschaulichen Beispielen hierin kann die Sekundärresonatoreinrichtung 316 durch das induktive Bauelement 100, das mit Bezug auf die Fig. 3a bis 3d oben beschrieben ist, bereitgestellt werden.

In einigen anschaulichen Ausführungsformen der vorliegenden Erfindung kann die bodenseitige Primärresonatoreinrichtung 302a einen Spulenaufbau mit zwei parallel verschalteten Wicklungen umfassen, die jeweils 13 Windungen aufweisen. Die fahrzeugseitige Sekundärresonatoreinrichtung 316 kann eine Resonatoreinrichtung mit einem zur Primärresonatoreinrichtung 302a identischen Aufbau oder dazu ähnlichen Aufbau mit 17,5 Windungen und geringerem Ferritvolumen im Kern darstellen.

Zwar gibt es zum aktuellen Zeitpunkt noch keine festgesetzte Norm, die die Randbedingungen eines kontaktlosen Energieübertragungssystems festlegt, jedoch sind schon branchenweite Spezifikation festgelegt, die akzeptable Kriterien für Interoperabilität, elektromagnetische Verträglichkeit, EMF, Mindestleistung, Sicherheit und Prüfung für das kabellose Laden von leichten Elektro- und Plug-in-Elektrofahrzeugen definieren. Auf dieser Grundlage sind drei Fahrzeugklassen mit jeweils unterschiedlichem Abstand zum Boden, der sogenannten Ground-Clearance oder "GC" festgelegt und es ist weiterhin der zugelassene Versatz zwischen den Primär- und Sekundärresonatoreinrichtungen definiert. Der Abstand GC kann dabei zwischen 100 und 250 mm variieren und der zulässige Versatz kann in einem Bereich von 0/0 (x-Richtung/y-Richtung) bis ±75/±100 mm liegen.

Beim Parken des Elektrofahrzeugs 312 über einer der Primärresonatoreinrichtungen 302a, 302b kann beispielsweise durch eine Kommunikation zwischen der Ladesteuerung 314 und dem Stromverteiler 330 über die Kommunikationseinrichtung 334 ein Ladevorgang eingeleitet werden, der wobei die Primärresonatoreinrichtung, über der das Elektrofahrzeug 312 geparkt wurde, im Beispiel von Fig. 4 die Primärresonatoreinrichtung 302a, betrieben wird. Mittels Nahfeldübertragung erfolgt eine induktive Kopplung zwischen der Primärresonatoreinrichtung 302a und der Sekundärresonatoreinrichtung 316, die elektromagnetische Energie von der Primärresonatoreinrichtung 302a aufnimmt und über die Ladesteuerung 314 (beispielsweise geeignete Gleichrichterschaltung umfassend) den Energiespeicher 318 lädt. Hierbei kann ein Ladezustand des Energiespeichers 318 durch die Ladesteuerung 314 überwacht werden und bei Erreichen eines gewünschten Ladezustands kann durch Kommunikation mit dem Stromverteiler 330 der Ladevorgang beendet werden. Das Ladesystem 300 kann dazu ausgebildet sein, die Gegenwart eines Gegenstandes bzw. Lebewesens zwischen der Sekundärresonatoreinrichtung 316 und der Primärresonatoreinrichtung 302a bzw. 302b zu erfassen und entsprechend einen Ladevorgang bei Erfassung eines positiven Ereignisses ("Gegenstand oder Lebewesen auf Primärresonatoreinrichtung bzw. in zu großer Nähe dazu") kann der Ladevorgang unterbrochen werden.

Tritt nun beim Parken des Elektrofahrzeugs 312 ein Versatz gegenüber einer Anordnung mit optimaler Kopplung auf, so ändern sich die Randbedingungen des Systems durch den Versatz zwischen den Primär- und Sekundärresonatoreinrichtungen, wie oben im Hinblick auf die Fig. 1c bis 1f erläutert wurde. Beispielsweise sinken die Induktivitäten der Primär- und Sekundärresonatoreinrichungen mit zunehmendem Versatz, ebenso wie die magnetische Kopplung k und die Gegeninduktivität M.

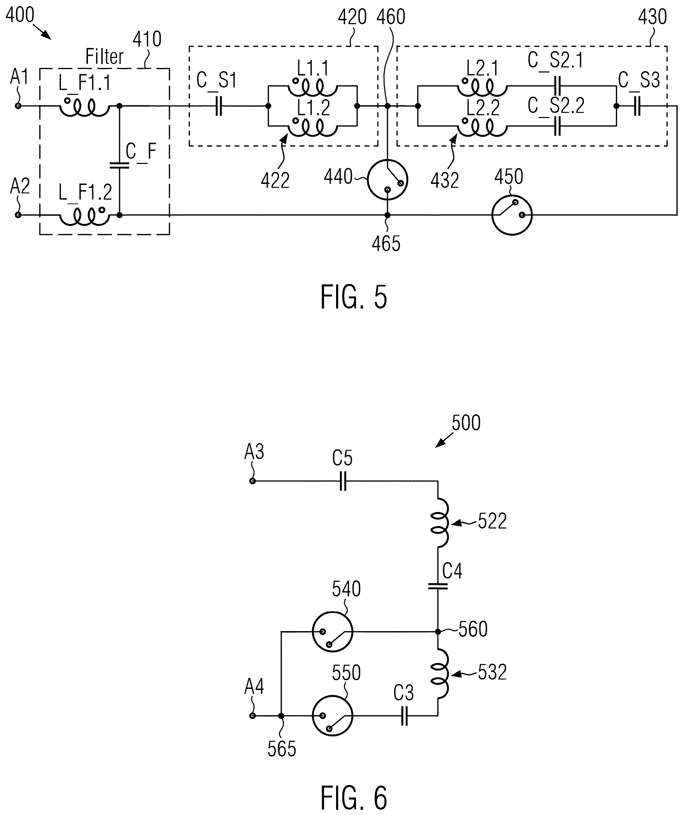

Mit Bezug auf Fig. 5 ist ein schematischer Schaltungsplan einer Resonatorschaltung 400 für ein kontaktloses Energieübertragungssystem zum Laden eines Elektrofahrzeugs (nicht dargestellt) gemäß anschaulichen Ausführungsformen der Erfindung dargestellt. Der schematische Schaltungsplan der Resonatorschaltung 400 weist zwei Anschlüsse A1 und A2 auf, die mit einer Versorgungsschaltung (nicht dargestellt) zur Versorgung des kontaktlosen Energieübertragungssystems mit Energie oder einer Gleichrichterschaltung (nicht dargestellt) verbunden sein können. Den Anschlüssen A1 und A2 nachgeschaltet ist eine Eingangsfiltereinrichtung 410 mit Induktivitäten L_F1.1 und L_F1.2, sowie einem Kondensator C_F. Weiterhin ist eine Mehrzahl von Wicklungen vorgesehen, die gemäß der Darstellung in Fig. 5 durch eine erste Gruppe 422 von Wicklungen und eine zweite Gruppe 432 von Wicklungen bereitgestellt werden. Weiterhin ist eine Mehrzahl von Kondensatoren vorgesehen, wie ein der ersten Gruppe 422 von Wicklungen zugeordneter Kondensator C_S1 und ein der zweiten Gruppe 432 von Wicklungen zugeordneter Kondensator C_S3. In anschaulichen Beispielen ist der Kondensator C_S1 zu der ersten Gruppe 422 von Wicklungen in Reihe geschaltet und der Kondensator C_S3 ist zu der zweiten Gruppe 432 von Wicklungen in Reihe geschaltet. Der schematische Schaltungsplan der Resonatorschaltung 400 umfasst ferner zwei Schaltelemente 440 und 450. Zwischen der ersten Gruppe 422 von Wicklungen und der zweiten Gruppe 432 von Wicklungen ist ein Verbindungsknoten 460 angeordnet, der über das Schaltelement 440 mit dem Anschluss A2 verbunden ist, und der Verbindungsknoten 460 ist über die erste Gruppe 422 von Wicklungen mit dem Anschluss A1 verbunden. Weiterhin ist das Schaltelement 450 zwischen der zweiten Gruppe 432 von Wicklungen und dem Anschluss A2 angeordnet und beide Schaltelemente 440 und 450 sind sternförmig an einem Verbindungsknoten 465 miteinander verbunden, so dass der Verbindungsknoten sternförmig zwischen den Schaltelementen 440 und 450 und dem Anschluss A2 angeordnet ist. Mit anderen Worten sind Leitungen als Beine oder Strahlen vom Verbindungknoten 465 ausgehend ausgebildet, die jeweils mit den Schaltelementen 440 und 450 und dem Anschluss A2 verbunden sind. Gemäß der dargestellten Ausführungsform sind lediglich das Schaltelement 440 und das Schaltelement 450 vorgesehen, wodurch eine Verkomplizierung der Schaltung vermieden wird. Der Verbindungsknoten 465 ist zwischen den Schaltelementen 440 und 450 angeordnet und über den Verbindungsknoten 465 ist jedes der Schaltelemente 440 und 450 mit dem Anschluss A2 verbunden. Insbesondere ist der Verbindungsknoten 465 sternförmig ausgebildet, wobei Leitungen als Beine oder Strahlen vom Verbindungknoten 465 ausgehen und jeweils mit den Schaltelementen 440 und 450 und dem Anschluss A2 verbunden sind.

In einigen anschaulichen Beispielen hierin sind die zwei Schaltelemente 440, 450 konfiguriert, so dass das Schaltelement 450 offen ist, solange das Schaltelement 440 geschlossen ist. Hierbei ist das Schaltelement 450 nur dann geschlossen ist, wenn das Schaltelement 440 offen ist. Damit ist in diesen anschaulichen Beispielen eine Konfiguration der Schaltelemente 440, 450 festgelegt.

Gemäß einigen anschaulichen Ausführungsformen ist die Mehrzahl von Wicklungen umfassend die erste Gruppe 422 von Wicklungen und die zweite Gruppe 432 von Wicklungen als eine Hybrid-Doppel-D-Solenoid-Spule über einem plattenförmigen Ferritkern (nicht dargestellt) bereitgestellt, wie hinsichtlich der Fig. 2 und der Fig. 3a bis 3d oben beschrieben ist. Ein Spulenaufbau gemäß einer Hybrid-Doppel-D-Solenoid-Spule erlaubt eine relativ große Kopplung bei großem Abstand und/oder Versatz von Primär- und Sekundärresonatoreinrichtungen relativ zueinander.

Mit Bezug auf Darstellung in Fig. 5 kann die erste Gruppe 422 von Wicklungen aus zwei parallel geschalteten elektrisch identischen Wicklungspaketen L1.1 und L1.2 gebildet sein. In diesem Fall kann die Strombelastbarkeit der ersten Gruppe von Wicklungen vergrößert werden und die Strom- und Spannungswerte der parallel geschaltete Wicklungspakete L1.1 und L1.2 sind in elektrisch identischen Wicklungspaketen identisch, so dass Ausgleichsströme zwischen den parallel geschalteten Wicklungspaketen vermieden werden. Durch die Verwendung von parallel geschalteten Wicklungspaketen.

Gemäß der Darstellung in Fig. 5 ist die zweite Gruppe 432 von Wicklungen aus zwei parallel geschalteten elektrisch identischen Wicklungspaketen L2.1 und L2.2 gebildet. Die Verwendung von parallel geschalteten Wicklungspaketen L2.1 und L2.2 ermöglicht, dass induzierte Spannungen in nicht genutzten Windungen von weggeschalteten Wicklungen der zweiten Gruppe von Wicklungen bei geöffnetem Schaltelement 450 teilweise oder vollständig eliminiert werden. Hierbei kann die Verwendung der parallel geschalteten Wicklungspakete L2.1 und L2.2 die Strombelastbarkeit der zweiten Gruppe 432 von Wicklungen vergrößern. Jedes der parallel geschalteten Wicklungspakete L2.1 und L2.2 der zweiten Gruppe 432 von Wicklungen ist mit einem zugeordneten zusätzlichen Kondensator C_S2.1 und C_S2.2 in Reihe geschaltet. Die den Wicklungspaketen L2.1 und L2.2 der zweiten Gruppe 432 von Wicklungen zugeordneten zusätzlichen Kondensatoren C_S2.1 und C_S2.2 sind derart ausgebildet, dass die Verschaltung der parallelen Wicklungspakete L2.1 und L2.2 der zweiten Gruppe 432 mit den zugeordneten zusätzlichen Kondensatoren C_S2.1 und C_S2.2 eine Resonanzfrequenz aufweist, die größer ist als eine Betriebsfrequenz des kontaktlosen Energieübertragungssystem, während eine Resonanzfrequenz der Resonatorschaltung 400 für eine Reihenschaltung der ersten und zweiten Gruppen 422, 432 von Wicklungen mit den zugeordneten Kondensatoren C_S1, C_S2.1, C_S2.2 und C_S3 eine Resonanzfrequenz aufweist, die im Wesentlichen gleich der Betriebsfrequenz des kontaktlosen Energieübertragungssystem ist. Der Ausdruck "im Wesentlichen" bezeichnet hier eine Abweichung von weniger als 30%, vorzugsweise weniger als 15%, weiter bevorzugt weniger als 10% wie zum Beispiel weniger als 5% oder sogar weniger als 1%. Somit wird erreicht, dass die Impedanz der weggeschalteten Windungen der zweiten Gruppe 432 von Wicklungen hoch ist und Ausgleichsströme unterdrückt werden. Wenn nun das Schaltelement 450 geöffnet ist, wird aus der Parallelschaltung der Wicklungspakete L2.1 und L2.2 der zweiten Gruppe 432 von Wicklungen eine Reihenschaltung, in der die Wicklungspakete L2.1 und L2.2 der zweiten Gruppe 432 von Wicklungen zueinander antiparallel geschaltet sind. Damit wird erreicht, dass sich die jeweils in den Windungen der zweiten Gruppe 432 von Wicklungen induzierten Spannungen aufheben.

In jedem Betriebsmodus der Resonatorschaltung 400 kann erreicht werden, dass die Resonatorschaltung 400 bei der Betriebsfrequenz des kontaktlosen Energieübertragungssystems in Resonanz gehalten wird. Beispielsweise kann die Betriebsfrequenz des kontaktlosen Energieübertragungssystems in einem Bereich von 80 bis 90 kHz liegen, in dem eine gute Energieübertragungseffizienz erreicht werden kann. Gemäß weiteren Beispielen kann die Resonanzfrequenz der Verschaltung der parallelen Wicklungspakete L2.1 und L2.2 der zweiten Gruppe 432 von Wicklungen mit den zugeordneten zusätzlichen Kondensatoren C_S2.1 und C_S2.2 zusätzlich zum Kondensator C_S3 größer sein als 90 kHz, so dass die Resonanzfrequenz der Verschaltung der parallelen Wicklungspakete L2.1 und L2.2 der zweiten Gruppe 432 von Wicklungen mit den zugeordneten zusätzlichen Kondensatoren C_S2.1 und C_S2.2 von der Betriebsfrequenz des kontaktlosen Energieübertragungssystems ausreichend entfernt ist.

In einigen anschaulichen Ausführungsformen der vorliegenden Erfindung kann die erste Gruppe 422 von Wicklungen eine erste Windungszahl aus einem Bereich von 5 bis 20 Windungen aufweisen und die zweite Gruppe 432 von Wicklungen kann eine zweite Windungszahl aus einem Bereich von 1 bis 10 Windungen aufweisen. Dabei kann die erste Windungszahl größer sein als die zweite Windungszahl. Somit wird eine kompakte Resonatorschaltung mit vorteilhafter Energieübertragungseffizienz ermöglicht.

In anschaulichen Beispielen kann die erste Windungszahl in einem Bereich von 7 bis 12 Windungen liegen, etwa 8 oder 9 oder 10 oder 11 Windungen. Die zweite Windungszahl kann in einem Bereich von 2 bis 6 Windungen liegen, etwa 3 oder 4 oder 5 Windungen. Dies stellt jedoch keine Beschränkung der Erfindung dar und es können beliebige Zahlen für die ersten und zweiten Windungszahlen in Betracht gezogen werden.

In einigen anschaulichen Ausführungsformen hierin kann die Resonatorschaltung 400 eine Primärresonatoreinrichtung in einem Primärladesystem (nicht dargestellt) zum Laden eines Elektrofahrzeugs (nicht dargestellt) sein, wodurch eine vorteilhafte Primärresonatoreinrichtung bereitgestellt wird, oder eine Sekundärresonatoreinrichtung in einem Sekundärladesystem (nicht dargestellt) zum Laden eines Elektrofahrzeugs (nicht dargestellt) sein.

Die Resonatorschaltung 400 aus Fig. 5 erlaubt zum Beispiel, eine Windungsanzahl der Mehrzahl von Wicklungen der Resonatorschaltung im Betrieb zu ändern, beispielsweise zu reduzieren oder zu erhöhen, je nachdem ob das Schaltelement 440 geschlossen und das Schaltelement 450 geöffnet wird, um die Windungszahl zu reduzieren, oder das Schaltelement 440 geöffnet und das Schaltelement 450 geschlossen wird, um die Windungszahl zu erhöhen.

Bezüglich dem Eingangsfilter 410 befindet sich zwischen den Anschlüssen A1 und A2 und den Gruppen 422 und 432 von Wicklungen eine LC-Filteranordnung mit einer gekoppelten Drossel in beiden Zuleitungen.

Hinsichtlich der ersten Gruppe 422 von Wicklungen ist diese mit dem zugeordneten (z.B. in Reihe geschalteten) Kondensator C_S1 kompensiert.

Hinsichtlich der zweiten Gruppe 432 von Wicklungen ist hier ein Kondensator C_S3 zugeordnet. Weiterhin sind gemäß der Darstellung von Fig. 5 zusätzlich die Kondensatoren C_S2.1 und C_S2.2 vorgesehen, so dass die zweite Gruppe von Wicklungen 432 mit den parallelen Wicklungspaketen L2.1 und L2.2 mit den drei Kondensatoren C_S2.1, C_S2.2 und C_S3 kompensiert ist.

In einem Betriebsmodus, in dem alle Windungen der Mehrzahl von Wicklungen genutzt werden, ist das Schaltelement 440 geöffnet und das Schaltelement 450 ist geschlossen. In diesem Fall sind die Wicklungspakete L2.1 und L2.2 parallel und werden von der Kombination der Kondensatoren C_S2.1, C_S2.2 und C_S3 kompensiert. Dabei addieren sich die Kapazitäten der Kondensatoren C_S2.1 und C_S2.2 als eine Parallelschaltung von Kondensatoren. Insgesamt sind dabei die Kondensatoren so ausgelegt, dass sich das System bei der Betriebsfrequenz (z. B. bei 85 kHz) resonant verhält.

In einem Betriebsmodus, in dem relativ zu dem oben beschriebenen Betriebsmodus die Windungsanzahl reduziert werden soll, ist das Schaltelement 440 geschlossen und das Schaltelement 450 ist geöffnet. Damit wird die zweite Gruppe 432 von Wicklungen zusammen mit den zugeordneten Kondensatoren überbrückt. Durch das Öffnen des Schaltelements 450 wird aus der Parallelschaltung der Wicklungspakete L2.1 und L2.2 der zweiten Gruppe 432 von Wicklungen eine Reihenschaltung und die induzierten Spannungen der Wicklungspakete L2.1 und L2.2 heben sich gegenseitig auf. Die Kondensatoren C_S2.1 und C_S2.2 sind so bereitgestellt, dass die Resonanz der zweiten Gruppe 432 von Wicklungen in diesem Betriebsmodus nun von der Betriebsfrequenz weit entfernt liegt. Dadurch wirkt eine große Impedanz und es können nur sehr kleine Ausgleichströme fließen. Wie in Fig. 5 dargestellt ist, sind die freigeschalteten Windungen der zweiten Gruppe 432 von Wicklungen in diesem Betriebsmodus ferner am Verbindungspunkt 460 weiterhin mit der Schaltung verbunden, wodurch sie ein definiertes Potential aufweisen und Beschädigungen hervorgerufen durch Potentialunterschiede verhindert werden.

Obgleich mit Bezug auf Fig. 5 anschauliche Ausführungsformen beschrieben sind, in denen der Verbindungsknoten 460 sternförmig mit 3 Beinen dargestellt ist, stellt dies keine Beschränkung der Erfindung dar. In alternativen Ausführungsformen (nicht dargestellt) kann der Verbindungsknoten 460 sternförmig mit mehr als drei Beinen oder Strahlen dargestellt sein, wobei drei Beine oder Strahlen entsprechend der Darstellung in Fig. 5 ausgebildet sind, während jedes bezüglich diesen drei Beinen oder Strahlen zusätzliche Bein oder Strahl, das oder der vom sternförmigen Verbindungsknoten ausgeht, vom Verbindungsknoten zu einer Induktivität mit einer bestimmten Anzahl von Wicklungen geht und nachfolgend an diese Induktivität über ein zusätzliches Schaltelement (nicht dargestellt) mit einem Verbindungsknoten verbunden ist, der dem Verbindungsknoten 465 in Fig. 5 entspricht. Somit ist es möglich, sukzessive eine verschiedene Anzahl von Windungen über ein selektives Hin- bzw. Wegschalten von Induktivitäten einzustellen. Zusätzlich oder alternativ können mehrere Induktivitäten parallel zueinander geschaltet werden, um eine effektive Induktivität für die Schaltung gebildet aus den parallel geschalteten Induktivitäten bereitzustellen. Damit kann eine feinere Einstellung der Induktivität der Schaltung erfolgen.

In diesen anschaulichen, nicht dargestellten Ausführungsformen wird ein kontaktloses Energieübertragungssystem zum Laden von Elektrofahrzeugen mit einer Resonatorschaltung bereitgestellt, die einen ersten und zweiten Anschluss, eine Mehrzahl von Wicklungen, eine Mehrzahl von Kondensatoren, ein erstes Schaltelement und ein zweites Schaltelement aufweist, wobei die Resonatorschaltung über den ersten und zweiten Anschluss mit einer Versorgungsschaltung oder einem Gleichrichter verbindbar ist, wobei die Mehrzahl von Wicklungen in eine erste Gruppe von Wicklungen und eine zweite Gruppe von Wicklungen und wenigstens eine dritte Gruppe von Wicklungen unterteilt ist, wobei einer jeden Gruppe von Wicklungen jeweils mindestens ein Kondensator aus der Mehrzahl von Kondensatoren zugeordnet ist, der zu der zugeordneten Gruppe von Wicklungen in Reihe geschaltet ist, wobei die Resonatorschaltung ferner einen Verbindungsknoten umfasst, mit dem die erste Gruppe von Wicklungen und die zweite Gruppe von Wicklungen und wenigstens die dritte Gruppe von Wicklungen sternförmig verbunden sind, so dass der Verbindungsknoten einerseits zwischen der ersten Gruppe von Wicklungen und der zweiten Gruppe von Wicklungen angeordnet ist und der Verbindungsknoten über das erste Schaltelement mit dem ersten Anschluss verbunden ist, andererseits der Verbindungsknoten zwischen der ersten Gruppe von Wicklungen und der dritten Gruppe von Wicklungen angeordnet ist und über ein weiteres der dritten Gruppe von Wicklungen zugeordnetes (drittes) Schaltelement mit dem ersten Anschluss verbunden ist, wobei der Verbindungsknoten über die erste Gruppe von Wicklungen mit dem zweiten Anschluss verbunden ist, wobei das zweite Schaltelement zwischen der zweiten Gruppe von Wicklungen und dem ersten Anschluss angeordnet ist und wobei das weitere der dritten Gruppe von Wicklungen zugeordnete Schaltelement mit dem ersten Anschluss verbunden ist. Es kann auch eine vierte Gruppe von Wicklungen mit einem zugeordneten weiteren (vierten) Schaltelement bereitgestellt werden, die mit dem sternförmigen Verbindungsknoten verbunden ist, wobei der Verbindungsknoten zwischen der ersten Gruppe von Wicklungen und der vierten Gruppe von Wicklungen angeordnet ist und über das weitere der vierten Gruppe von Wicklungen zugeordnete (vierte) Schaltelement mit dem ersten Anschluss verbunden ist. Dies kann beliebig fortgeführt sein, so dass allgemein n (n > 1) Gruppen von Wicklungen bereitgestellt werden, wobei der n-ten Gruppe von Wicklungen ein n-tes Schaltelement zugeordnet ist und die n-te Gruppe von Wicklungen mit dem Verbindungsknoten verbunden ist, so dass der Verbindungsknoten zwischen der ersten Gruppe von Wicklungen und der n-ten Gruppe von Wicklungen angeordnet ist und über das n-te Schaltelement mit dem ersten Anschluss verbunden ist. Dabei ist in jedem Fall aber der Verbindungsknoten über die erste Gruppe von Wicklungen mit dem zweiten Anschluss verbunden und der Verbindungsknoten ist ferner über das erste Schaltelement mit dem ersten Anschluss verbunden. Damit ist beispielsweise beschrieben, dass bei einem sternförmigen Verbindungsknoten 460 oder 465 mit drei Beinen oder Strahlen zwei Beine oder Strahlen ausgebildet sind, so dass diese jeweils mit einem Reihenschaltungsabschnitt gebildet aus einer Gruppe von Wicklungen und einem Schaltelement verbunden sind. Dies bedeutet für einen sternförmigen Verbindungsknoten mit drei Beinen oder Strahlen, dass zwei Beine oder Strahlen jeweils mit einem Reihenschaltungsabschnitt verbunden sind, oder allgemein für einen sternförmigen Verbindungsknoten mit n Beinen oder Strahlen (n-1) Beine oder Strahlen jeweils mit einem Reihenschaltungsabschnitt verbunden sind.

Mit Bezug auf Fig. 6 ist ein schematischer Schaltungsplan einer Resonatorschaltung 500 für ein kontaktloses Energieübertragungssystem gemäß weiterer anschaulicher Ausführungsformen der Erfindung dargestellt. Der schematische Schaltungsplan der Resonatorschaltung 500 weist zwei Anschlüsse A3 und A4 auf, die mit einer Versorgungsschaltung (nicht dargestellt) zur Versorgung des kontaktlosen Energieübertragungssystems mit Energie oder einer Gleichrichterschaltung (nicht dargestellt) verbunden sein können.

Ähnlich wie in der Resonatorschaltung 400 aus Fig. 5 kann den Anschlüssen A3 und A4 eine Eingangsfiltereinrichtung (nicht dargestellt) nachgeschaltet sein, die entsprechend der Eingangsfiltereinrichtung 410 aus Fig. 5 ausgebildet sein kann.

Weiterhin ist eine Mehrzahl von Wicklungen vorgesehen, die gemäß der Darstellung in Fig. 6 durch eine erste Gruppe 522 von Wicklungen und eine zweite Gruppe 532 von Wicklungen bereitgestellt werden. Außerdem ist eine Mehrzahl von Kondensatoren vorgesehen, so dass der ersten Gruppe 522 von Wicklungen Kondensatoren C4 und C5 zugeordnet sind und der zweiten Gruppe 532 von Wicklungen ein Kondensator C3 zugeordnet ist. In anschaulichen Beispielen sind die Kondensatoren C4 und C5 zu der ersten Gruppe 522 von Wicklungen in Reihe geschaltet und der Kondensator C_3 ist zu der zweiten Gruppe 532 von Wicklungen in Reihe geschaltet.

Der schematische Schaltungsplan der Resonatorschaltung 500 umfasst ferner gemäß der Darstellung in Fig. 6 zwei Schaltelemente 540 und 550. Gemäß der dargestellten Ausführungsform sind lediglich das Schaltelement 440 und das Schaltelement 450 vorgesehen, wodurch eine Verkomplizierung der Schaltung vermieden wird. Zwischen der ersten Gruppe 522 von Wicklungen und der zweiten Gruppe 532 von Wicklungen ist ein Verbindungsknoten 560 angeordnet, der über das Schaltelement 540 mit dem Anschluss A4 verbunden ist. Der Verbindungsknoten 560 ist weiterhin über die erste Gruppe 522 von Wicklungen mit dem Anschluss A3 verbunden und außerdem ist das Schaltelement 550 zwischen der zweiten Gruppe 532 von Wicklungen und dem Anschluss A4 angeordnet. Weiterhin ist zwischen den Schaltelementen 540 und 550 ein Verbindungsknoten 565 angeordnet, über den jedes der Schaltelemente 540 und 550 mit dem Anschluss A4 verbunden ist.

In einigen anschaulichen Beispielen hierin sind die zwei Schaltelemente 540, 550 derart konfiguriert, dass das Schaltelement 550 offen ist, solange das Schaltelement 540 geschlossen ist. Hierbei ist das Schaltelement 550 nur dann geschlossen, wenn das Schaltelement 540 offen ist. Damit ist in diesen anschaulichen Beispielen eine Konfiguration der Schaltelemente 540, 550 festgelegt.

Gemäß einigen anschaulichen Ausführungsformen ist die Mehrzahl von Wicklungen umfassend die erste Gruppe 522 von Wicklungen und die zweite Gruppe 532 von Wicklungen als eine Hybrid-Doppel-D-Solenoid-Spule über einem plattenförmigen Ferritkern (nicht dargestellt) bereitgestellt, wie hinsichtlich der Fig. 2 und der Fig. 3a bis 3d oben beschrieben ist. Ein Spulenaufbau gemäß einer Hybrid-Doppel-D-Solenoid-Spule erlaubt eine relativ große Kopplung bei großem Abstand und/oder Versatz von Primär- und Sekundärresonatoreinrichtungen relativ zueinander.

In anschaulichen Ausführungsformen der Erfindung ist der der Gruppe 532 von Wicklungen zugeordnete Kondensatoren C3 derart ausgebildet, dass die Verschaltung aus der Gruppe 532 von Wicklungen mit dem zugeordneten Kondensator C3 eine Resonanzfrequenz aufweist, die größer ist als eine Betriebsfrequenz des kontaktlosen Energieübertragungssystem, während eine Resonanzfrequenz der Resonatorschaltung 400 für eine Reihenschaltung der ersten und zweiten Gruppen 522, 532 von Wicklungen mit den zugeordneten Kondensatoren C3 bis C5 eine Resonanzfrequenz aufweist, die im Wesentlichen gleich der Betriebsfrequenz des kontaktlosen Energieübertragungssystem ist. Der Ausdruck "im Wesentlichen" bezeichnet hier eine Abweichung von weniger als 30%, vorzugsweise weniger als 15%, weiter bevorzugt weniger als 10% wie zum Beispiel weniger als 5% oder sogar weniger als 1%. Somit wird erreicht, dass die Impedanz der weggeschalteten Windungen der zweiten Gruppe 532 von Wicklungen hoch ist und Ausgleichsströme unterdrückt werden.

In jedem Betriebsmodus der Resonatorschaltung 500 kann erreicht werden, dass die Resonatorschaltung 500 bei der Betriebsfrequenz des kontaktlosen Energieübertragungssystems in Resonanz gehalten wird. Beispielsweise kann die Betriebsfrequenz des kontaktlosen Energieübertragungssystems in einem Bereich von 80 bis 90 kHz liegen, in dem eine gute Energieübertragungseffizienz erreicht werden kann. Gemäß weiteren Beispielen kann die Resonanzfrequenz der zweiten Gruppe 532 von Wicklungen mit dem zugeordneten Kondensator C3 größer sein als 90 kHz, so dass die Resonanzfrequenz der Verschaltung der zweiten Gruppe 532 von Wicklungen mit dem zugeordneten Kondensator C3 von der Betriebsfrequenz des kontaktlosen Energieübertragungssystems ausreichend entfernt ist.

In einigen anschaulichen Ausführungsformen der vorliegenden Erfindung kann die erste Gruppe 522 von Wicklungen eine erste Windungszahl aus einem Bereich von 5 bis 20 Windungen aufweisen und die zweite Gruppe 532 von Wicklungen kann eine zweite Windungszahl aus einem Bereich von 1 bis 10 Windungen aufweisen. Dabei kann die erste Windungszahl größer sein als die zweite Windungszahl. Somit wird eine kompakte Resonatorschaltung mit vorteilhafter Energieübertragungseffizienz ermöglicht.

In anschaulichen Beispielen kann die erste Windungszahl in einem Bereich von 7 bis 12 Windungen liegen, etwa 8 oder 9 oder 10 oder 11 Windungen. Die zweite Windungszahl kann in einem Bereich von 2 bis 6 Windungen liegen, etwa 3 oder 4 oder 5 Windungen. Dies stellt jedoch keine Beschränkung der Erfindung dar und es können beliebige Zahlen für die ersten und zweiten Windungszahlen in Betracht gezogen werden.

In einigen anschaulichen Ausführungsformen hierin kann die Resonatorschaltung 500 eine Primärresonatoreinrichtung in einem Primärladesystem (nicht dargestellt) zum Laden eines Elektrofahrzeugs (nicht dargestellt) sein, wodurch eine vorteilhafte Primärresonatoreinrichtung bereitgestellt wird, oder eine Sekundärresonatoreinrichtung in einem Sekundärladesystem (nicht dargestellt) zum Laden eines Elektrofahrzeugs (nicht dargestellt) sein. Durch die im Zusammenhang mit Fig. 5 beschriebene Resonatorschaltung 400 erfolgt eine Anpassung der Gegeninduktivität, wie nachfolgend genauer erläutert wird, während eine Anpassung einer Resonanzfrequenz nicht oder im Wesentlichen nicht erfolgt. Unabhängig von einer Schaltkonfiguration der Schaltelemente 440, 450 verleiben die Wicklungen 422 und 432 magnetisch im System. Durch die parallele Aufbauform der Wicklungen L2.1 und L2.2 kann eine Verlustleistung in den Wicklungen L2.1 und L2.2 reduziert werden, vor allem wenn diese bei offenem Schaltelement 450 "weggeschaltet", wie aus der obigen Beschreibung zu Fig. 5 hervorgeht.

Wie in Fig. 6 dargestellt ist, sind die freigeschalteten Windungen der zweiten Gruppe 532 von Wicklungen in Falle eines Betriebsmodus mit geöffnetem Schaltelement 550 am Verbindungspunkt 560 weiterhin mit der Schaltung verbunden, wodurch sie ein definiertes Potential aufweisen und Beschädigungen hervorgerufen durch Potentialunterschiede verhindert werden.

Obgleich mit Bezug auf Fig. 6 anschauliche Ausführungsformen beschrieben sind, in denen der Verbindungsknoten 560 sternförmig mit drei Beinen dargestellt ist, stellt dies keine Beschränkung der Erfindung dar. In alternativen Ausführungsformen (nicht dargestellt) kann der Verbindungsknoten 560 sternförmig mit mehr als drei Beinen oder Strahlen dargestellt sein, wobei drei Beine oder Strahlen entsprechend der Darstellung in Fig. 6 ausgebildet sind, während jedes bezüglich diesen drei Beinen oder Strahlen zusätzliche Bein oder Strahl, das oder der vom sternförmigen Verbindungsknoten ausgeht, vom Verbindungsknoten zu einer Induktivität mit einer bestimmten Anzahl von Wicklungen geht und nachfolgend an diese Induktivität über ein zusätzliches Schaltelement (nicht dargestellt) mit einem Verbindungsknoten verbunden ist, der dem Verbindungsknoten 565 in Fig. 6 entspricht. Somit ist es möglich, sukzessive eine verschiedene Anzahl von Windungen über ein selektives Hin- bzw. Wegschalten von Induktivitäten einzustellen. Zusätzlich sind mehrere Induktivitäten parallel zueinander geschaltet, um eine effektive Induktivität für die Schaltung gebildet aus den parallel geschalteten Induktivitäten bereitzustellen. Damit erfolgt eine feinere Einstellung der Induktivität der Schaltung.

In diesen anschaulichen, nicht dargestellten Ausführungsformen wird ein kontaktloses Energieübertragungssystem zum Laden von Elektrofahrzeugen mit einer Resonatorschaltung bereitgestellt, die einen ersten und zweiten Anschluss, eine Mehrzahl von Wicklungen, eine Mehrzahl von Kondensatoren, ein erstes Schaltelement und ein zweites Schaltelement aufweist, wobei die Resonatorschaltung über den ersten und zweiten Anschluss mit einer Versorgungsschaltung oder einem Gleichrichter verbindbar ist, wobei die Mehrzahl von Wicklungen in eine erste Gruppe von Wicklungen und eine zweite Gruppe von Wicklungen und wenigstens eine dritte Gruppe von Wicklungen unterteilt ist, wobei einer jeden Gruppe von Wicklungen jeweils mindestens ein Kondensator aus der Mehrzahl von Kondensatoren zugeordnet ist, der zu der zugeordneten Gruppe von Wicklungen in Reihe geschaltet ist, wobei die Resonatorschaltung ferner einen Verbindungsknoten umfasst, mit dem die erste Gruppe von Wicklungen und die zweite Gruppe von Wicklungen und wenigstens die dritte Gruppe von Wicklungen sternförmig verbunden sind, so dass der Verbindungsknoten einerseits zwischen der ersten Gruppe von Wicklungen und der zweiten Gruppe von Wicklungen angeordnet ist und der Verbindungsknoten über das erste Schaltelement mit dem ersten Anschluss verbunden ist, andererseits der Verbindungsknoten zwischen der ersten Gruppe von Wicklungen und der dritten Gruppe von Wicklungen angeordnet ist und über ein weiteres der dritten Gruppe von Wicklungen zugeordnetes (drittes) Schaltelement mit dem ersten Anschluss verbunden ist, wobei der Verbindungsknoten über die erste Gruppe von Wicklungen mit dem zweiten Anschluss verbunden ist, wobei das zweite Schaltelement zwischen der zweiten Gruppe von Wicklungen und dem ersten Anschluss angeordnet ist und wobei das weitere der dritten Gruppe von Wicklungen zugeordnete Schaltelement mit dem ersten Anschluss verbunden ist. Es kann auch eine vierte Gruppe von Wicklungen mit einem zugeordneten weiteren (vierten) Schaltelement bereitgestellt werden, die mit dem sternförmigen Verbindungsknoten verbunden ist, wobei der Verbindungsknoten zwischen der ersten Gruppe von Wicklungen und der vierten Gruppe von Wicklungen angeordnet ist und über das weitere der vierten Gruppe von Wicklungen zugeordnete (vierte) Schaltelement mit dem ersten Anschluss verbunden ist. Dies kann beliebig fortgeführt sein, so dass allgemein n (n > 1) Gruppen von Wicklungen bereitgestellt werden, wobei der n-ten Gruppe von Wicklungen ein n-tes Schaltelement zugeordnet ist und die n-te Gruppe von Wicklungen mit dem Verbindungsknoten verbunden ist, so dass der Verbindungsknoten zwischen der ersten Gruppe von Wicklungen und der n-ten Gruppe von Wicklungen angeordnet ist und über das n-te Schaltelement mit dem ersten Anschluss verbunden ist. Dabei ist in jedem Fall aber der Verbindungsknoten über die erste Gruppe von Wicklungen mit dem zweiten Anschluss verbunden und der Verbindungsknoten ist ferner über das erste Schaltelement mit dem ersten Anschluss verbunden. Damit sind beispielsweise Ausführungsformen beschrieben, in welchen ein sternförmiger Verbindungsknoten 560 und/oder 565 mit drei Beinen oder Strahlen zwei Beine oder Strahlen ausgebildet ist, so dass diese jeweils mit einem Reihenschaltungsabschnitt gebildet aus einer Gruppe von Wicklungen und einem Schaltelement verbunden sind. Dies bedeutet für einen sternförmigen Verbindungsknoten mit drei Beinen oder Strahlen, dass zwei Beine oder Strahlen jeweils mit einem Reihenschaltungsabschnitt verbunden sind, oder allgemein für einen sternförmigen Verbindungsknoten mit n Beinen oder Strahlen (n-1) Beine oder Strahlen jeweils mit einem Reihenschaltungsabschnitt verbunden sind.

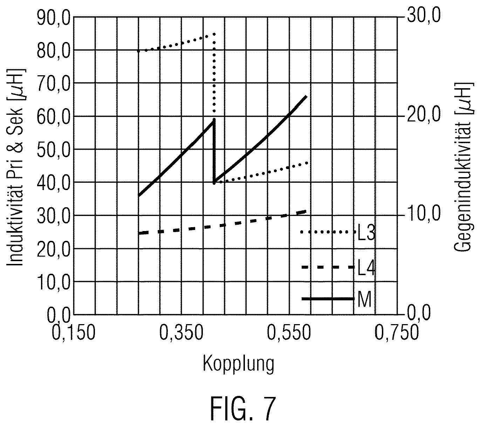

Mit Bezug auf Fig. 7 sind Ergebnisse einer Messung an einem kontaktlosen Energieübertragungssystem gemäß einer beispielhaften Ausführungsform der Erfindung veranschaulicht. Fig. 7 stellt graphisch einen gemessenen Zusammenhang zwischen der Induktivität einer Resonatoreinrichtung (linke Ordinate in Fig. 7) und der Kopplung zwischen Primär- und Sekundärresonatoreinrichtung (Abszisse in Fig. 7) und einen Zusammenhang zwischen der Gegeninduktivität der Resonatoreinrichtung (rechte Ordinate in Fig. 7) und der Kopplung (Abszisse in Fig. 7) dar. Es ist hier ersichtlich, dass die Änderung in der Gegeninduktivität M auf einen relativ kleinen Arbeitsbereich begrenzt werden kann, wenn im Vergleich mit dem Vergleichsbeispiel in Fig. 1f gesehen.

Es ist weiterhin ersichtlich, dass in Ausführungsformen (nicht dargestellt), in denen der in Fig. 5 dargestellte Verbindungsknoten 460 sternförmig mit mehr als drei Beinen ausgebildet ist, eine größere Menge an Partitionen von Wicklungen geschaltet werden kann und, auch unter Parallelschaltung von mehreren Induktivitäten, eine Gegeninduktivität M der Schaltung feiner eingestellt werden kann. Mit Bezug auf Fig. 7 bedeutet dies, dass die in Fig. 7 dargestellte einzelne Abstufung durch mehrere kleinere Abstufungen ersetzt wird, so dass Änderungen in der Gegeninduktivität M in diesem Fall sogar noch auf einen kleineren Arbeitsbereich begrenzt werden kann, als in Fig. 7 dargestellt ist.

Zusammenfassend werden Änderungen der Gegeninduktivität eines Übertragungssystems mit großem Luftspalt und sich ändernden Kopplungsbedingungen hinsichtlich von funktionskritischen Größen kompensiert. In einigen anschaulichen Ausführungsformen wird der zusätzlich der Vorteil eines Hybrid-Doppel-D-Solenoid-Spulensystems mit einer großen erreichbaren Kopplung in Kombination mit einer Gegeninduktivitätsanpassung verwendet, so dass in allen Arbeitspunkten effizient große Leistungen übertragen werden können. Hierbei wurde ein Schaltungsaufbau bereitgestellt, der es ermöglicht eine bestimmte Anzahl von Windungen einer Resonatorschaltung frei zu schalten, ohne dabei die Funktion des Systems zu beeinträchtigen, oder nennenswerte zusätzliche Verluste zu verursachen, und eine Änderung der Gegeninduktivität zu begrenzen. Es ist damit in den anschaulichen Ausführungsformen der Erfindung ein Spulenaufbau der Spulen von Resonatoren zur kontaktlosen Energieübertragung möglich, bei der trotz einer starken Varianz in der Kopplung zwischen den Resonatoren ein guter Wirkungsgrad über eine Gegeninduktivitätsanpassung realisiert wird.

## Patentansprüche

1. Kontaktloses Energieübertragungssystem zum Laden von Elektrofahrzeugen mit einer Primärresonatoreinrichtung und einer Sekundärresonatoreinrichtung, wobei mindestens eine von der Primärresonatoreinrichtung und der Sekundärresonatoreinrichtung eine Resonatorschaltung (400; 500) umfasst,
wobei die Resonatorschaltung (400; 500) einen ersten Anschluss (A2; A4), einen zweiten Anschluss (A1, A2), eine Mehrzahl von Wicklungen (160), eine Mehrzahl von Kondensatoren, ein erstes Schaltelement (440; 540) und ein zweites Schaltelement (450; 550) aufweist, wobei die Resonatorschaltung (400; 500) über den ersten Anschluss (A2; A4) und den zweiten Anschluss (A1, A2) mit einer Versorgungsschaltung oder einem Gleichrichter verbindbar ist,
wobei die Mehrzahl von Wicklungen (160) in eine erste Gruppe (422; 522) von Wicklungen und eine zweite Gruppe (432; 532) von Wicklungen unterteilt ist und dabei einer jeden Gruppe von Wicklungen jeweils mindestens ein Kondensator aus der Mehrzahl von Kondensatoren zugeordnet ist, der zu der zugeordneten Gruppe von Wicklungen in Reihe geschaltet ist,
wobei ein erster Verbindungsknoten (460; 560) jeweils zwischen zwei aus der ersten Gruppe (422; 522) von Wicklungen, der zweiten Gruppe (432; 532) von Wicklungen und dem ersten Schaltelement (450; 550) angeordnet ist, so dass der erste Verbindungsknoten (460; 560) über das erste Schaltelement (440; 540) mit dem ersten Anschluss (A2; A4) verbunden ist und über die erste Gruppe (422; 522) von Wicklungen mit dem zweiten Anschluss (A1; A3) verbunden ist, wobei der erste Verbindungsknoten (460; 560) sternförmig ausgebildet ist, und
wobei das zweite Schaltelement (450; 550) zwischen der zweiten Gruppe (432; 532) von Wicklungen und dem ersten Anschluss (A2; A4) angeordnet ist,
**gekennzeichnet dadurch, dass** die zweite Gruppe (432) von Wicklungen aus zwei parallel geschalteten elektrisch identischen Wicklungspaketen (L2.1, L2.2) gebildet ist und jedes der parallel geschalteten Wicklungspakete (L2.1, L2.2) der zweiten Gruppe (432) von Wicklungen jeweils mit einem zugeordneten zusätzlichen Kondensator (C_S2.1, C_S2.2) in Reihe geschaltet ist und wobei die den Wicklungspaketen (L2.1, L2.2) der zweiten Gruppe (432) von Wicklungen zugeordneten zusätzlichen Kondensatoren (C_S2.1, C_S2.2) derart ausgebildet sind, dass die Verschaltung der parallelen Wicklungspakete (L2.1, L2.2) der zweiten Gruppe (432) mit den zugeordneten zusätzlichen Kondensatoren (C_S2.1, C_S2.2) eine Resonanzfrequenz aufweist, die größer ist als eine Betriebsfrequenz des kontaktlosen Energieübertragungssystem, während eine Resonanzfrequenz der Resonatorschaltung (400) für eine Reihenschaltung der ersten und zweiten Gruppen (422, 432) von Wicklungen mit den zugeordneten Kondensatoren (C_S1, C_S2.1, C_S2.2, C_S3) eine Resonanzfrequenz aufweist, die gleich der Betriebsfrequenz des kontaktlosen Energieübertragungssystem ist..

2. Kontaktloses Energieübertragungssystem nach Anspruch 1, ferner umfassend eine dritte Gruppe von Wicklungen und ein damit in Reihe geschaltetes drittes Schaltelement, wobei die dritte Gruppe von Wicklungen und das damit in Reihe geschaltete dritte Schaltelement parallel zu der zweiten Gruppe (432; 532) von Wicklungen mit dem ersten Verbindungsknoten (460; 560) verbunden ist.

3. Kontaktloses Energieübertragungssystem nach Anspruch 1 oder 2, wobei zwischen dem ersten Schaltelement (440; 540) und dem zweiten Schaltelement (450; 550) ein zweiter Verbindungsknoten (465; 565) angeordnet ist, über den jeweils das erste Schaltelement (440; 540) und das zweite Schaltelement (450; 550) mit dem ersten Anschluss (A2; A4) verbunden ist.

4. Kontaktloses Energieübertragungssystem nach Anspruch 3, wobei ferner der zweite Verbindungsknoten (465; 565) zwischen dem ersten Schaltelement (440; 540), dem zweiten Schaltelement (450; 550) und dem ersten Anschluss (A2; A4) sternförmig ausgebildet ist und die dritte Gruppe von Wicklungen und das damit in Reihe geschaltete dritte Schaltelement zwischen dem ersten Verbindungsknoten (460; 560) und dem zweiten Verbindungsknoten (465; 565) parallel zu der zweiten Gruppe (432; 532) und dem ersten Schaltelement (440; 540) geschaltet ist.

5. Kontaktloses Energieübertragungssystem nach Anspruch 3 oder 4, wobei der zweite Verbindungsknoten (465; 565) zwischen dem ersten Schaltelement (440; 540), dem zweiten Schaltelement (450; 550) und dem ersten Anschluss (A2; A4) sternförmig ausgebildet ist.

6. Kontaktloses Energieübertragungssystem nach Anspruch 5, ferner umfassend einen weiteren Schaltungsabschnitt mit einer vierten Gruppe von Wicklungen und einem vierten Schaltelement, wobei der weitere Schaltungsabschnitt parallel zu der zweiten Gruppe (432; 532) von Wicklungen mit dem zweiten Verbindungsknoten (465; 565) verbunden ist.

7. Kontaktloses Energieübertragungssystem nach Anspruch 6, wobei ferner der zweite Verbindungsknoten (465; 565) zwischen dem ersten Schaltelement (440; 540), dem zweiten Schaltelement (450; 550) und dem ersten Anschluss (A2; A4) sternförmig ausgebildet ist und der weitere Schaltungsabschnitt zwischen dem ersten Verbindungsknoten (460; 560) und dem zweiten Verbindungsknoten (465; 565) parallel zu der zweiten Gruppe (432; 532) und dem ersten Schaltelement (440; 540) geschaltet ist.

8. Kontaktloses Energieübertragungssystem nach einem der Ansprüche 1 bis 7, wobei die zwei Schaltelemente (440, 450; 540, 550) konfiguriert sind, so dass das zweite Schaltelement (450; 550) offen ist, solange das erste Schaltelement (440; 540) geschlossen ist, und das zweite Schaltelement (450; 550) nur dann geschlossen ist, wenn das erste Schaltelement (450; 550) offen ist.

9. Kontaktloses Energieübertragungssystem nach einem der Ansprüche 1 bis 8, wobei die Mehrzahl von Wicklungen (160) als eine Hybrid-Doppel-D-Solenoid-Spule (150) über einem plattenförmigen Ferritkern (110) bereitgestellt ist.

10. Kontaktloses Energieübertragungssystem nach einem der Ansprüche 1 bis 9, wobei die erste Gruppe (422) von Wicklungen und/oder die zweite Gruppe (432) jeweils aus zwei parallel geschalteten elektrisch identischen Wicklungspaketen (L1.1, L1.2; L2.1, L2.2) gebildet ist.

11. Kontaktloses Energieübertragungssystem nach einem der Ansprüche 1 bis 10, wobei die erste Gruppe (422; 522) von Wicklungen eine erste Windungszahl aus einem Bereich von 5 bis 20 Windungen aufweist und die zweite Gruppe (432; 532) von Wicklungen eine zweite Windungszahl aus einem Bereich von 1 bis 10 Windungen aufweist, wobei die erste Windungszahl größer ist als die zweite Windungszahl.

12. Kontaktloses Energieübertragungssystem nach einem der Ansprüche 1 bis 11, wobei die Resonanzfrequenz der Verschaltung der parallelen Wicklungspakete (L2.1, L2.2) der zweiten Gruppe (432) mit den zugeordneten zusätzlichen Kondensatoren (C_S2.1, C_S2.2) größer ist als 90 kHz.

13. Kontaktloses Energieübertragungssystem nach einem der Ansprüche 1 bis 12, wobei die Betriebsfrequenz des kontaktlosen Energieübertragungssystems in einem Bereich von 80 bis 90 kHz liegt.

## Claims

1. Contactless energy transmission system for charging electric vehicles, comprising a primary resonator device and a secondary resonator device, wherein at least one of the primary resonator device and the secondary resonator device comprises a resonator circuit (400; 500),
wherein the resonator circuit (400; 500) has a first terminal (A2; A4), a second terminal (A1, A2), a plurality of coils (160), a plurality of capacitors, a first switching element (440; 540) and a second switching element (450; 550), wherein the resonator circuit (400; 500) is connectable to a supply circuit or a rectifier via the first terminal (A2; A4) and the second terminal (A1, A2),
wherein the plurality of coils (160) is subdivided into a first group (422; 522) of coils and a second group (432; 532) of coils, and at least one capacitor from the plurality of capacitors is associated with each group of coils and is connected in series with the associated group of coils,
wherein a first connection node (460; 560) is arranged between two of the first group (422; 522) of coils, the second group (432; 532) of coils and the first switching element (450; 550), so that the first connection node (460; 560) is connected to the first terminal (A2; A4) via the first switching element (440; 540) and is connected to the second terminal (A1; A3) via the first group (422; 522) of coils, wherein the first connection node (460; 560) is of starlike design, and
wherein the second switching element (450; 550) is arranged between the second group (432; 532) of coils and the first terminal (A2; A4),
**characterized in that in that** the second group (432) of coils is formed from two electrically identical coil sets (L2.1, L2.2) connected in parallel, and each of the coil sets (L2.1, L2.2) connected in parallel of the second group (432) of coils is connected in series in each case with an associated additional capacitor (C_S2.1, C_S2.2) and wherein the additional capacitors (C_S2.1, C_S2.2) associated with the coil sets (L2.1, L2.2) of the second group (432) of coils are designed such that that the interconnection of the parallel coil sets (L2.1, L2.2) of the second group (432) to the associated additional capacitors (C_S2.1, C_S2.2) has a resonant frequency which is higher than an operating frequency of the contactless energy transmission system, while a resonant frequency of the resonator circuit (400) for a series circuit of the first and second groups (422, 432) of coils with the associated capacitors (C_S1, C_S2.1, C_S2.2, C_S3) has a resonant frequency that is equal to the operating frequency of the contactless energy transmission system.

2. Contactless energy transmission system according to claim 1, further comprising a third group of coils and a third switching element connected in series therewith, wherein the third group of coils and the third switching element connected in series therewith are connected to the first connection node (460; 560) in parallel with the second group (432; 532) of coils.

3. Contactless energy transmission system according to claim 1 or 2, wherein a second connection node (465; 565) is arranged between the first switching element (440; 540) and the second switching element (450; 550), via which the first switching element (440; 540) and the second switching element (450; 550) are connected to the first connection (A2; A4).

4. Contactless energy transmission system according to claim 3, wherein the second connection node (465; 565) between the first switching element (440; 540), the second switching element (450; 550) and the first terminal (A2; A4) is further of a starlike design and the third group of coils and the third switching element connected in series therewith are connected between the first connection node (460; 560) and the second connection node (465; 565) in parallel with the second group (432; 532) and the first switching element (440; 540).

5. Contactless energy transmission system according to claim 3 or 4, wherein the second connection node (465; 565) is configured in a starlike manner between the first switching element (440; 540), the second switching element (450; 550) and the first connection (A2; A4).

6. Contactless energy transmission system according to claim 5, further comprising a further circuit section with a fourth group of coils and a fourth switching element, wherein the further circuit section is connected to the second connection node (465; 565) in parallel with the second group (432; 532) of coils.

7. Contactless energy transmission system according to claim 6, wherein, furthermore, the second connection node (465; 565) between the first switching element (440; 540), the second switching element (450; 550) and the first terminal (A2; A4) is designed in a starlike manner and the further circuit section between the first connection node (460; 560) and the second connection node (465; 565) is connected in parallel with the second group (432; 532) and the first switching element (440; 540)

8. Contactless energy transmission system according to one of claims 1 to 7, wherein the two switching elements (440, 450; 540, 550) are configured such that the second switching element (450; 550) is open while the first switch element (440; 540) is closed, and the second switch element (450; 550) is closed only when the first switch element (450; 550) is open.

9. Contactless energy transmission system according to any one of claims 1 to 8, wherein the plurality of coils (160) is provided as a hybrid double-D solenoid coil (150) over a plate-shaped ferrite core (110).

10. Contactless energy transmission system according to one of claims 1 to 9, wherein the first group (422) of coils and/or the second group (432) is formed in each case from two electrically identical coil sets (L1.1, L1.2; L2.1, L2.2) connected in parallel.

11. Contactless energy transmission system according to one of claims 1 to 10, wherein the first group (422; 522) of coils has a first number of turns from a range of 5 to 20 turns and the second group (432; 532) of coils has a second number of turns from a range of 1 to 10 turns, wherein the first number of turns is greater than the second number of turns.

12. Contactless energy transmission system according to one of claims 1 to 11, wherein the resonant frequency of the circuit formed by the parallel coil sets (L2.1, L2.2) of the second group (432) with the associated additional capacitors (C_S2.1, C_S2.2) is greater than 90 kHz.

13. Contactless energy transmission system according to any one of claims 1 to 12, wherein the operating frequency of the contactless energy transmission system is in a range of 80 to 90 kHz.

## Revendications

1. Système de transmission d'énergie sans contact permettant de charger des véhicules électriques et comprenant un dispositif de résonateur primaire et un dispositif de résonateur secondaire, dans lequel au moins un parmi le dispositif de résonateur primaire et le dispositif de résonateur secondaire comprend un circuit de résonateur (400 ; 500),
dans lequel le circuit de résonateur (400 ; 500) présente une première borne (A2 ; A4), une seconde borne (A1, A2), une pluralité d'enroulements (160), une pluralité de condensateurs, un premier élément de commutation (440 ; 540) et un deuxième élément de commutation (450 ; 550), dans lequel le circuit de résonateur (400 ; 500) peut être connecté à un circuit d'alimentation ou à un redresseur par l'intermédiaire de la première borne (A2 ; A4) et de la seconde borne (A1, A2),
dans lequel la pluralité d'enroulements (160) est divisée en un premier groupe (422 ; 522) d'enroulements et en un deuxième groupe (432 ; 532) d'enroulements, et respectivement au moins un condensateur parmi la pluralité de condensateurs est associé à un groupe respectif d'enroulements, ledit condensateur étant connecté en série au groupe d'enroulements associé,
dans lequel un premier nœud de connexion (460 ; 560) est agencé respectivement entre deux parmi le premier groupe (422 ; 522) d'enroulements, le deuxième groupe (432 ; 532) d'enroulements et le premier élément de commutation (450 ; 550), de sorte que le premier nœud de connexion (460 ; 560) est connecté à la première borne (A2 ; A4) par l'intermédiaire du premier élément de commutation (440 ; 540) et est connecté à la seconde borne (A1 ; A3) par l'intermédiaire du premier groupe (422 ; 522) d'enroulements, dans lequel le premier nœud de connexion (460 ; 560) est réalisé en forme d'étoile, et
dans lequel le deuxième élément de commutation (450 ; 550) est agencé entre le deuxième groupe (432 ; 532) d'enroulements et la première borne (A2 ; A4),
**caractérisé en ce que** le deuxième groupe (432) d'enroulements est formé de deux paquets d'enroulements (L2.1, L2.2) électriquement identiques connectés en parallèle et **en ce que** chacun des paquets d'enroulements (L2.1, L2.2) du deuxième groupe (432) d'enroulements connectés en parallèle est respectivement connecté en série avec un condensateur (C_S2.1, C_S2.2) supplémentaire associé, et dans lequel les condensateurs (C_S2.1, C_S2.2) supplémentaires associés aux paquets d'enroulements (L2.1, L2.2) du deuxième groupe (432) d'enroulements sont réalisés de telle manière que l'interconnexion des paquets d'enroulements (L2.1, L2.2) parallèles du deuxième groupe (432) avec les condensateurs (C_S2.1, C_S2.2) supplémentaires associés présente une fréquence de résonance qui est supérieure à une fréquence de fonctionnement du système de transmission d'énergie sans contact, tandis qu'une fréquence de résonance du circuit de résonateur (400) pour une commutation en série des premier et deuxième groupes (422, 432) d'enroulements avec les condensateurs (C_S1, C_S2.1, C_S2.2, C_S3) présente une fréquence de résonance égale à la fréquence de fonctionnement du système de transmission d'énergie sans contact.

2. Système de transmission d'énergie sans contact selon la revendication 1, comprenant en outre un troisième groupe d'enroulements et un troisième élément de commutation connecté en série avec celui-ci, dans lequel le troisième groupe d'enroulements et le troisième élément de commutation connecté en série avec celui-ci sont connectés au premier nœud de connexion (460 ; 560) en parallèle par rapport au deuxième groupe d'enroulements (432 ; 532).

3. Système de transmission d'énergie sans contact selon la revendication 1 ou 2, dans lequel un second nœud de connexion (465 ; 565), par l'intermédiaire duquel le premier élément de commutation (440 ; 540) et le deuxième élément de commutation (450 ; 550) sont respectivement connectés à la première borne (A2 ; A4), est agencé entre le premier élément de commutation (440 ; 540) et le deuxième élément de commutation (450 ; 550).

4. Système de transmission d'énergie sans contact selon la revendication 3, dans lequel le second nœud de connexion (465 ; 565) est en outre réalisé en forme d'étoile entre le premier élément de commutation (440 ; 540), le deuxième élément de commutation (450 ; 550) et la première borne (A2 ; A4), et le troisième groupe d'enroulements et le troisième élément de commutation connecté en série avec celui-ci sont connectés entre le premier nœud de connexion (460 ; 560) et le second nœud de connexion (465 ; 565) en parallèle par rapport au deuxième groupe (432 ; 532) et au premier élément de commutation (440 ; 540).

5. Système de transmission d'énergie sans contact selon la revendication 3 ou 4, dans lequel le second nœud de connexion (465 ; 565) est réalisé en forme d'étoile entre le premier élément de commutation (440 ; 540), le deuxième élément de commutation (450 ; 550) et la première borne (A2 ; A4).

6. Système de transmission d'énergie sans contact selon la revendication 5, comprenant en outre une autre partie de circuit comprenant un quatrième groupe d'enroulements et un quatrième élément de commutation, dans lequel l'autre partie de circuit est connectée au second nœud de connexion (465 ; 565) en parallèle par rapport au deuxième groupe (432 ; 532) d'enroulements.

7. Système de transmission d'énergie sans contact selon la revendication 6, dans lequel le second nœud de connexion (465 ; 565) est en outre réalisé en étoile entre le premier élément de commutation (440 ; 540), le deuxième élément de commutation (450 ; 550) et la première borne (A2 ; A4), et l'autre partie de circuit est connectée en parallèle par rapport au deuxième groupe (432 ; 532) et au premier élément de commutation (440 ; 540) entre le premier nœud de connexion (460 ; 560) et le second nœud de connexion (465 ; 565).

8. Système de transmission d'énergie sans contact selon l'une quelconque des revendications 1 à 7, dans lequel les deux éléments de commutation (440, 450 ; 540, 550) sont configurés de sorte que le deuxième élément de commutation (450 ; 550) est ouvert tant que le premier élément de commutation (440 ; 540) est fermé et le deuxième élément de commutation (450 ; 550) n'est ensuite fermé que lorsque le premier élément de commutation (450 ; 550) est ouvert.

9. Système de transmission d'énergie sans contact selon l'une des revendications 1 à 8, dans lequel la pluralité d'enroulements (160) est fournie sous la forme d'un solénoïde double bobine hybride (150) au-dessus d'un noyau de ferrite (110) en forme de plaque.

10. Système de transmission d'énergie sans contact selon l'une quelconque des revendications 1 à 9, dans lequel le premier groupe (422) d'enroulements et/ou le deuxième groupe (432) est/sont respectivement formé(s) de deux paquets d'enroulements (L1.1, L1.2 ; L2.1, L2.2) électriquement identiques connectés en parallèle.

11. Système de transmission d'énergie sans contact selon l'une quelconque des revendications 1 à 10, dans lequel le premier groupe (422 ; 522) d'enroulements présente un premier nombre d'enroulements situé dans une plage comprise entre 5 et 20 enroulements et le second groupe (432 ; 532) d'enroulements présente un second nombre d'enroulements situé dans une plage comprise entre 1 et 10 enroulements, dans lequel le premier nombre d'enroulements est supérieur au second nombre d'enroulements.

12. Système de transmission d'énergie sans contact selon l'une quelconque des revendications 1 à 11, dans lequel la fréquence de résonance de l'interconnexion des paquets d'enroulements (L2.1, L2.2) parallèles du deuxième groupe (432) avec les condensateurs (C_S2.1, C_S2.2) supplémentaires associés est supérieure à 90 kHz.

13. Système de transmission d'énergie sans contact selon l'une quelconque des revendications 1 à 12, dans lequel la fréquence de fonctionnement du système de transmission d'énergie sans contact se situe dans une plage comprise entre 80 et 90 kHz.
